# EUROPEAN PATENT SPECIFICATION

(11) **EP 3 396 895 B1**
(45) Date of publication and mention of the grant of the patent: **24.12.2025**
(21) Application number: 16878690.3
(22) Date of filing: 20.12.2016
(51) Int. Cl.: G06F 21/16

(54) **DATA STORAGE APPARATUS AND DATA STORAGE PROGRAM**
DATENSPEICHERGERÄT UND DATENSPEICHERPROGRAMM
APPAREIL DE STOCKAGE DE DONNÉES ET PROGRAMME DE STOCKAGE DE DONNÉES

(30) Priority: 25.12.2015 JP 2015253982
(43) Date of publication of application: 31.10.2018
(73) Proprietor: Mitsubishi Electric Corporation, Chiyoda-ku Tokyo 100-8310 (JP)
(72) Inventor: SATO, Tsuneo, Tokyo 100-8310 (JP); YOSHIDA, Mitsunobu, Tokyo 100-8310 (JP)
(74) Representative: Meissner Bolte Partnerschaft mbB
(86) International application number: PCT/JP2016/087930
(87) International publication number: WO 2017/110801

(56) References cited:
- EP-A2- 1 130 414
- EP-A2- 2 937 815
- CN-A- 104 714 240
- JP-A- 2004 085 239
- JP-A- 2004 085 239
- JP-A- 2015 007 824
- JP-A- H08 327 360
- JP-A- H10 197 357
- KR-A- 20110 024 363
- US-A1- 2009 192 709
- US-A1- 2014 163 848
- US-B1- 7 093 131
- US-B1- 7 093 131
- KEIICHI MAEKAWA, JUNICHI HIGUCHI, KIICHIRO ISHIKAWA : "Koseido GPS Ido Keisoku Sochi Mitsubishi Mobile Mapping System (MMS) / High-precision GPS mobile measurement system Mitsubishi Mobile Mapping System (MMS)", IMAGE LAB, vol. 22, no. l, 10 January 2011 (2011-01-10), pages 74 - 81, XP009511976, ISSN: 0915-6755
- "Niji Riyo Sokushin no Tameno Fusho no Data Kokai ni Kansuru Kihonteki Kangaekata (Guideline)(An", DAI 52 KAI KAKU FUSHO JOHOKA TOKATSU SEKININSHA (CIO) RENRAKU KAIGI, 25 June 2013 (2013-06-25), pages 1 - 39, XP009517998, Retrieved from the Internet <URL:https://www.kantei.go.jp/jp/singi/it2/cio/dai52/kihon.pdf> [retrieved on 20170208]

## Description

### Technical Field

The present invention relates to a moving-type positioning and measurement apparatus which acquires three-dimensional position information, a data storage apparatus which stores three-dimensional position information, and a data utilization apparatus which utilizes three-dimensional position information.

In particular, the invention is directed to accuracy assurance and falsification prevention of three-dimensional position information which is stored in a data storage apparatus.

The moving-type positioning and measurement apparatus is an apparatus which acquires three-dimensional position information about, for example, a terrain, a building, a construction, a road, a bridge, a tunnel, and a sign while moving with, for example, a vehicle.

The three-dimensional position information is data including three-dimensional coordinate values, such as latitude, longitude, and altitude.

### Background Art

Examples of a measurement system which acquires three-dimensional position information include an aircraft-mounted laser measurement apparatus and a vehicle-mounted laser measurement apparatus.

Three-dimensional position information about, for example, a terrain, a building, a construction, a road, a bridge, a tunnel, and a sign is acquired by these measurement systems.

Examples of the vehicle-mounted laser measurement apparatus include a mobile mapping system (MMS) which acquires three-dimensional point group data representing a three-dimensional shape of a surrounding terrestrial object during movement on the road.

A vehicle used in the MMS is equipped with a positioning apparatus and a measurement apparatus. A specific positioning apparatus is a global positioning system (GPS), and a specific measurement apparatus is a laser scanner and an inertial measurement unit (IMU).

An MMS is disclosed in Patent Literature 1.

In the disclosed MMS, measurement and calculation are performed about the self-location and attitude of the vehicle by a combination of a GPS and an IMU. Moreover, the relative position of a terrestrial object shape is measured by a laser scanner. Then, three-dimensional point group data configured with latitude, longitude, and altitude is calculated about the terrestrial object shape as three-dimensional position information.

In recent years, three-dimensional position information has become used in a diversity of industries, and there is a movement to collectively manage and utilize data acquired by, for example, an MMS.

However, the range of measurement and the accuracy of data vary with industries. More specifically, while a narrow range is measured with high accuracy in the surveying industry, a wide range is measured with not so high accuracy in the cartographic industry.

Therefore, if management of pieces of data acquired in respective industries is able to be unified, overlapping of measuring ranges between industries is eliminated, so that measurement work is made more efficient and management of the acquired data is facilitated.

Even in the Council on Competitiveness-Nippon, the utilization of three-dimensional position information in the fields of, for example, an autonomous driving system, social infrastructure operation and maintenance, and IT agriculture is assumed, and the concept of a platform for unifying management of three-dimensional position information needed for the respective utilization fields is being promoted. Such a platform is called a data platform or common platform.

Non-Patent Literature 1 is a final report of the project in the year of 2014 of the Council on Competitiveness-Nippon, and the final report describes that the latest and high-accuracy three-dimensional position information is required to be stored in a common platform and the mechanism of managing pieces of data with the uniform degree of accuracy is also required.
US 2014/163848 A1 discloses that a method of evaluating the driving behavior in a vehicle. The method includes determining values of a plurality of parameters of the operation of a first vehicle in a first road segment, determining values of the plurality of parameters for one or more second vehicles in a second road segment having similar properties to those of the first road segment, comparing the determined values of the first vehicle and the one or more second vehicles and providing an evaluation of the driving behavior of the first vehicle, responsive to the comparison.
US 2009/192709 A1 discloses an implementation of an environment in which techniques for position source selection is employed. The environment includes an electronic device to provide a variety of functionality through various applications, components, modules, and operational modes of the electronic device.

### Citation List

### Patent Literature

Patent Literature 1: Japanese Patent JP 4 344 869B2

### Non Patent Literature

Non-Patent Literature 1: Final Report of Project in the Year of 2014 of the Council on Competitiveness-Nippon, "Service and Preparation of a Common Platform Using Three-dimensional Position Information", Council on Competitiveness-Nippon

### Summary of the Invention

### Technical Problem

Using a measurement apparatus such as an MMS enables accurately measuring a wide range in a short amount of time.

However, the accuracy of a measurement result varies according to the manufacturer, grade, and calibration state of the measurement apparatus, and the accuracy of a measurement result also varies according to a measurer who uses the measurement apparatus and a measuring condition. Therefore, generally, an error amount is assigned to measured data.

However, since there is no uniform criterion for error amounts, the error amount to be assigned to measured data varies with manufacturers.

Moreover, since no countermeasures are taken against falsification prevention of measured data, measured data the accuracy of which is actually poor may be disguised as measured data the accuracy of which is high. Furthermore, since falsification of data for proving the measurement date and time is also possible, old measured data which was acquired many years ago may be disguised as the latest measured data. Then, the falsified measured data may be used in, for example, building construction work or road construction work.

On the other hand, to collectively manage and utilize three-dimensional position information acquired by a measurement apparatus such as an MMS, it is important that the reliability of measured data be ensured.

However, since the current status is vulnerable to falsification of measured data, it is difficult to collectively manage and utilize three-dimensional position information.

An object of the invention is to provide a positioning and measurement apparatus which increases the reliability of measured data itself by preventing falsification of three-dimensional position information and additional information thereof. Moreover, an object of the invention is to provide a data storage apparatus which manages three-dimensional position information and delivers the managed three-dimensional position information to users. Furthermore, an object of the invention is to provide a data utilization apparatus which utilizes three-dimensional position information delivered from the data storage apparatus.

### Solution to the Problem

The present invention is defined by independent claims 1 and 6 as appended. Further embodiments are given in the dependent claims.

### Advantageous Effects of the Invention

According to the invention, since a set of three-dimensional position information and additional information is encrypted, falsification of the three-dimensional position information and additional information can be prevented.

Furthermore, since a set of three-dimensional position information and additional information is encrypted, the additional information is associated with the three-dimensional position information, so that the accuracy of the three-dimensional position information can be identified by the additional information.

Therefore, the reliability of three-dimensional position information can be increased.

### Brief Description of the Drawings

- FIG. 1: is a configuration diagram of a positioning and measurement data system 100 in an Embodiment 1.
- FIG. 2: is a configuration diagram of a positioning and measurement apparatus 200 in the Embodiment 1.
- FIG. 3: is a configuration diagram of a data storage apparatus 300 in the Embodiment 1.
- FIG. 4: is a configuration diagram of a data utilization apparatus 400 in the Embodiment 1.
- FIG. 5: is a flowchart of a positioning and measurement method (measurement) in the Embodiment 1.
- FIG. 6: is an image diagram of encrypted information data 110 in the Embodiment 1.
- FIG. 7: is a flowchart of a data storage method (storage) in the Embodiment 1.
- FIG. 8: is a flowchart of a data storage method (provision) in the Embodiment 1.
- FIG. 9: is an image diagram of encrypted information data 120 in the Embodiment 1.
- FIG. 10: is a flowchart of a data utilization method (utilization) in the Embodiment 1.
- FIG. 11: is a flowchart of a data utilization method (comparison) in the Embodiment 1.
- FIG. 12: is a diagram illustrating a point group image in the Embodiment 1.
- FIG. 13: is a diagram illustrating a picture of the point group image in the Embodiment 1.
- FIG. 14: is a diagram illustrating a picture of a point group image in the Embodiment 1.
- FIG. 15: is an image diagram of encrypted difference data 130 in the Embodiment 1.
- FIG. 16: is a flowchart of a data storage method (instruction) in the Embodiment 1.
- FIG. 17: is an image diagram of encrypted instruction data 140 in the Embodiment 1.
- FIG. 18: is a flowchart of a positioning and measurement method (remeasurement) in the Embodiment 1.
- FIG. 19: is a hardware configuration diagram of the positioning and measurement apparatus 200 in the Embodiment 1.
- FIG. 20: is a hardware configuration diagram of the data storage apparatus 300 in the Embodiment 1.
- FIG. 21: is a hardware configuration diagram of the data utilization apparatus 400 in the Embodiment 1.
- FIG. 22: is a configuration diagram of a positioning and measurement apparatus 200 in an Embodiment 2.
- FIG. 23: is a diagram illustrating another example of a hardware configuration of a positioning and measurement apparatus 200 in the embodiments.
- FIG. 24: is a diagram illustrating another example of a hardware configuration of a data storage apparatus 300 in the embodiments.
- FIG. 25: is a diagram illustrating another example of a hardware configuration of a data utilization apparatus 400 in the embodiments.

### Description of Embodiments

### Embodiment 1

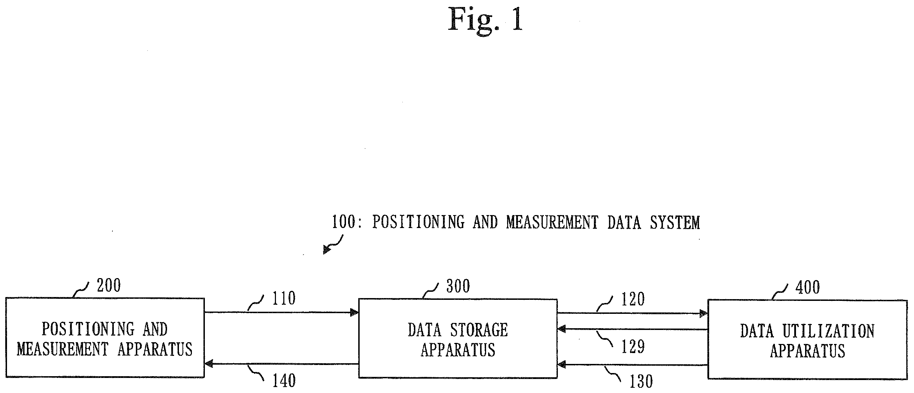

A positioning and measurement data system 100 is described based on FIG. 1 to FIG. 21.

### Description of Configuration

A configuration of the positioning and measurement data system 100 is described based on FIG. 1.

The positioning and measurement data system 100 is a system which acquires, stores, and utilizes three-dimensional position information for identifying the position of a terrestrial object.

The positioning and measurement data system 100 includes a positioning and measurement apparatus 200, a data storage apparatus 300, and a data utilization apparatus 400.

The positioning and measurement apparatus 200 is mounted on a movable body. More specifically, the positioning and measurement apparatus 200 is mounted on a vehicle. A vehicle on which the positioning and measurement apparatus 200 is mounted is referred to as a measurement vehicle.

While the measurement vehicle is moving, the positioning and measurement apparatus 200 receives a positioning signal to measure the position of the positioning and measurement apparatus 200 itself and also acquires three-dimensional position information. A specific positioning signal is a global positioning system (GPS) signal.

The positioning and measurement apparatus 200 is an apparatus equivalent to, for example, an aircraft-mounted laser measurement apparatus, a ship-mounted laser measurement apparatus, a vehicle-mounted laser measurement apparatus, or a mobile mapping system (MMS).

Three-dimensional position information which is acquired by the positioning and measurement apparatus 200 is equivalent to three-dimensional point group data which is acquired by the MMS. The three-dimensional point group data is data representing a three-dimensional shape of a surrounding terrestrial object.

The data storage apparatus 300 determines the accuracy of three-dimensional position information acquired by the positioning and measurement apparatus 200, and records, stores, and manages the three-dimensional position information and the accuracy thereof.

The data storage apparatus 300 is an apparatus equivalent to, for example, a data server or a data cloud.

The data utilization apparatus 400 is mounted on a movable body. More specifically, the data utilization apparatus 400 is mounted on a vehicle. A vehicle on which the data utilization apparatus 400 is mounted is referred to as a utilization vehicle.

While the utilization vehicle is moving, the data utilization apparatus 400 utilizes three-dimensional position information, and also detects a difference between the three-dimensional position information and the current status.

The data utilization apparatus 400 is an apparatus equivalent to, for example, a car navigation system or an autonomous driving apparatus.

Although not illustrated, a certificate authority is present which safely generates, manages, and delivers a key used for cryptographic processing.

Arrows illustrated in the figure indicate exchanging of information.

The arrow leading from the positioning and measurement apparatus 200 to the data storage apparatus 300 and the arrow leading from the data storage apparatus 300 to the data utilization apparatus 400 mainly indicate the flow of three-dimensional position information.

The arrow leading from the data utilization apparatus 400 to the data storage apparatus 300 and the arrow leading from the data storage apparatus 300 to the positioning and measurement apparatus 200 mainly indicate the flow of information about a difference between three-dimensional position information and the current status.

Exchanging of information is performed using wired communication, wireless communication, or a medium.

The positioning and measurement apparatus 200 transmits encrypted information data 110 to the data storage apparatus 300, and receives encrypted instruction data 140 from the data storage apparatus 300.

The data storage apparatus 300 receives the encrypted information data 110 from the positioning and measurement apparatus 200. Moreover, the data storage apparatus 300 receives request data 129 from the data utilization apparatus 400, and transmits encrypted information data 120 to the data utilization apparatus 400. Furthermore, the data storage apparatus 300 receives encrypted difference data 130 from the data utilization apparatus 400, and transmits the encrypted instruction data 140 to the positioning and measurement apparatus 200.

The contents of the encrypted information data 110, the request data 129, the encrypted information data 120, the encrypted difference data 130, and the encrypted instruction data 140 are described below.

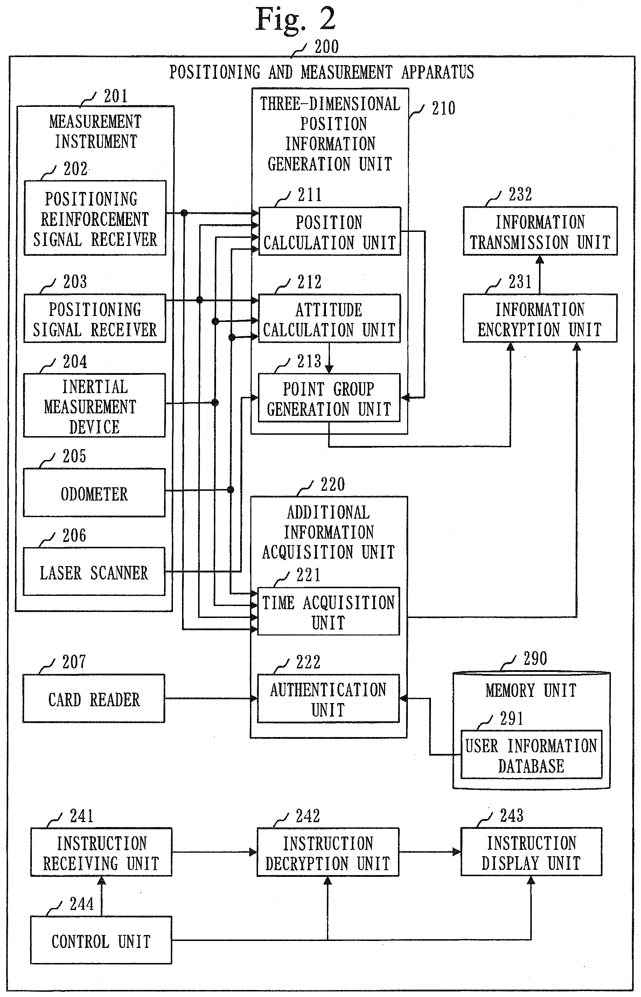

A configuration of the positioning and measurement apparatus 200 is described based on FIG. 2.

The positioning and measurement apparatus 200 includes a measurement instrument 201 and a card reader 207.

A specific measurement instrument 201 includes a positioning reinforcement signal receiver 202, a positioning signal receiver 203, an inertial measurement device 204, an odometer 205, and a laser scanner 206.

The positioning reinforcement signal receiver 202 is a receiver which receives a positioning reinforcement signal including information for increasing the positioning accuracy.

The positioning signal receiver 203 is a receiver which receives a positioning signal transmitted from a positioning satellite. A specific positioning satellite is a GPS satellite.

The inertial measurement device 204 is a device which measures an angular velocity and an acceleration.

The odometer 205 is a device which measures the distance traveled until now.

The laser scanner 206 radiates laser light and detects laser light reflected from a terrestrial object to measure the distance to the terrestrial object and the azimuth direction thereof. Such measurement is referred to as laser measurement. A portion at which the laser light is reflected of the terrestrial object is referred to as a measurement point. The laser light reflected at the measurement point is referred to as reflected light. A specific terrestrial object includes, for example, a building, a construction, a road, a bridge, a tunnel, and a sign.

The card reader 207 is a device which reads information from an integrated circuit (IC) card. The card reader 207 includes a contact type and a non-contact type, and the type of the card reader 207 is selected according to the type of an IC card.

The positioning and measurement apparatus 200 further includes a three-dimensional position information generation unit 210, an additional information acquisition unit 220, an information encryption unit 231, and an information transmission unit 232.

The three-dimensional position information generation unit 210 includes a position calculation unit 211, an attitude calculation unit 212, and a point group generation unit 213. The additional information acquisition unit 220 includes a time acquisition unit 221 and an authentication unit 222. The functions of these units are described below.

All of the measurement instrument 201, the three-dimensional position information generation unit 210, the additional information acquisition unit 220, the information encryption unit 231, the information transmission unit 232, the card reader 207, an instruction receiving unit 241, an instruction decryption unit 242, an instruction display unit 243, and a memory unit 290 can be mounted on a movable body, such as a vehicle, an aircraft, or a ship.

Furthermore, the measurement instrument 201, the additional information acquisition unit 220, the information encryption unit 231, the information transmission unit 232, the card reader 207, the instruction receiving unit 241, the instruction decryption unit 242, the instruction display unit 243, and the memory unit 290 can be mounted on a specific movable body, such as a vehicle, an aircraft, or a ship, and the three-dimensional position information generation unit 210 can be placed in, for example, a computer server Y located outside the specific movable body. In this case, output signals of the respective devices (the positioning reinforcement signal receiver 202, the positioning signal receiver 203, the inertial measurement device 204, the odometer 205, and the laser scanner 206) of the measurement instrument 201 are directly transmitted to the information encryption unit 231.

Then, the output signals of the respective devices of the measurement instrument 201 and an output signal of the additional information acquisition unit 220 are sent to the information encryption unit 231, and an encryption processing result from the information encryption unit 231 is sent to the information transmission unit 232. The encryption processing result is transmitted from the information transmission unit 232, is then received by an information receiving unit Z1 of the computer server Y, is then decrypted by an information decryption unit Z2, and is then input to the three-dimensional position information generation unit 210.

At this time, the three-dimensional position information generation unit 210 acquires pieces of information from the respective devices of the measurement instrument 201 via the information transmission unit 232, the information receiving unit Z1, and the information decryption unit Z2, and performs processing in the position calculation unit 211, the attitude calculation unit 212, and the point group generation unit 213.

Moreover, the three-dimensional position information generation unit 210 sends an output signal of the point group generation unit 213 to an information encryption unit W1. Furthermore, the information encryption unit W1 receives an output signal of the additional information acquisition unit 220 decrypted by the information decryption unit Z2. The information encryption unit W1 performs encryption processing on the output signal of the point group generation unit 213 and the output signal of the additional information acquisition unit 220, and sends a result of the encryption processing to an information transmission unit W2.

The information transmission unit W2 sends the result of the encryption processing performed by the information encryption unit W1 to an information receiving unit 311 of the data storage apparatus 300. Here, the information encryption unit W1 operates in a similar way to that in the information encryption unit 231. The information transmission unit W2 operates in a similar way to that in the information transmission unit 232. The information receiving unit Z1 operates in a similar way to that in the information receiving unit 311. The information decryption unit Z2 operates in a similar way to that in an information decryption unit 312.

Furthermore, the computer server Y can be incorporated in the data storage apparatus 300. In this case, the information encryption unit W1 and the information transmission unit W2 can be omitted, the information receiving unit Z1 functions as the information receiving unit 311 of the data storage apparatus 300, and the information decryption unit Z2 functions as the information decryption unit 312 of the data storage apparatus 300.

The positioning and measurement apparatus 200 further includes the instruction receiving unit 241, the instruction decryption unit 242, an instruction display unit 243, and a control unit 244. The functions of these units are described below.

The positioning and measurement apparatus 200 further includes the memory unit 290.

The memory unit 290 stores data which is used, generated, or input and output by the positioning and measurement apparatus 200. More specifically, for example, a user information database 291 is stored in the memory unit 290. The content of the user information database 291 is described below.

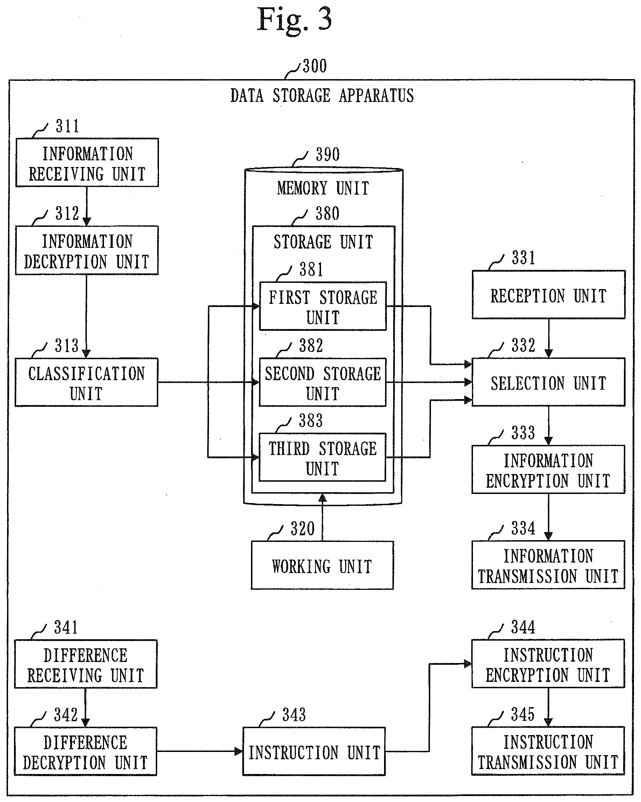

A configuration of the data storage apparatus 300 is described based on FIG. 3.

The data storage apparatus 300 includes the information receiving unit 311, the information decryption unit 312, a classification unit 313, a working unit 320, a reception unit 331, a selection unit 332, an information encryption unit 333, and an information transmission unit 334. The functions of these units are described below.

The data storage apparatus 300 further includes a difference receiving unit 341, a difference decryption unit 342, an instruction unit 343, an instruction encryption unit 344, and an instruction transmission unit 345. The functions of these units are described below.

The data storage apparatus 300 further includes a memory unit 390.

The memory unit 390 stores data which is used, generated, or input and output by the data storage apparatus 300. The memory unit 390 includes a storage unit 380. The storage unit 380 includes a first storage unit 381, a second storage unit 382, and a third storage unit 383.

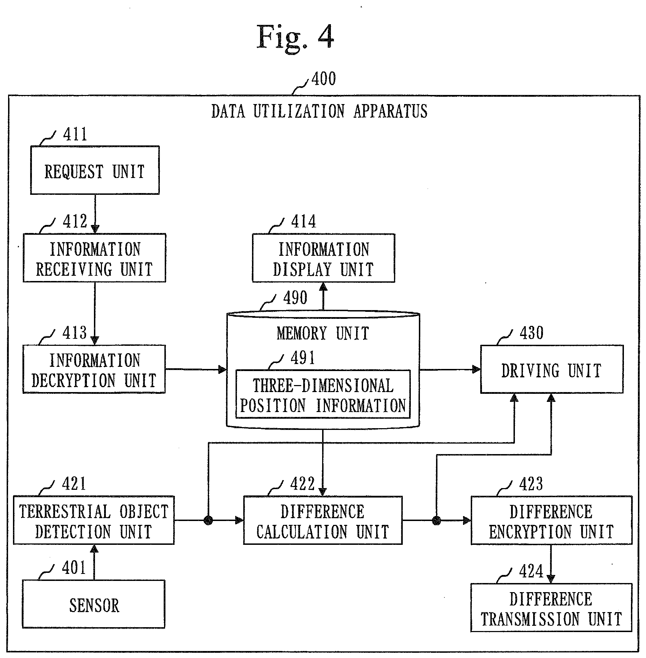

A configuration of the data utilization apparatus 400 is described based on FIG. 4.

The data utilization apparatus 400 includes a request unit 411, an information receiving unit 412, an information decryption unit 413, and an information display unit 414. The functions of these units are described below.

The data utilization apparatus 400 further includes a terrestrial object detection unit 421, a difference calculation unit 422, a difference encryption unit 423, a difference transmission unit 424, and a driving unit 430. The functions of these units are described below.

The data utilization apparatus 400 further includes a memory unit 490.

The memory unit 490 stores data which is used, generated, or input and output by the data utilization apparatus 400.

More specifically, for example, three-dimensional position information 491 is stored in the memory unit 490.

The data utilization apparatus 400 further includes a sensor 401.

A specific sensor 401 includes, for example, a camera, a laser scanner, and a positioning apparatus.

### Description of Operation

An operation of the positioning and measurement data system 100 is equivalent to a data management method. Moreover, a procedure of the data management method is equivalent to a procedure of a data management program.

An operation of the positioning and measurement apparatus 200 is equivalent to a positioning and measurement method. Moreover, a procedure of the positioning and measurement method is equivalent to a procedure of a positioning and measurement program.

An operation of the data storage apparatus 300 is equivalent to a data storage method. Moreover, a procedure of the data storage method is equivalent to a procedure of a data storage program.

An operation of the data utilization apparatus 400 is equivalent to a data utilization method. Moreover, a procedure of the data utilization method is equivalent to a procedure of a data utilization program.

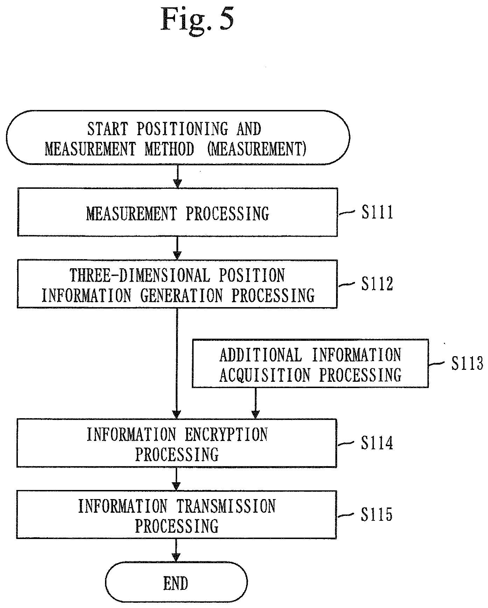

A positioning and measurement method (measurement) used for the positioning and measurement apparatus 200 to perform measurement is described based on FIG. 5.

Step S111 is measurement processing.

In step S111, the measurement instrument 201 performs measurement to acquire measured data.

More specifically, the positioning reinforcement signal receiver 202, the positioning signal receiver 203, the inertial measurement device 204, the odometer 205, and the laser scanner 206 operate in the following way.

The positioning reinforcement signal receiver 202 receives a positioning reinforcement signal and then outputs positioning reinforcement data. The positioning reinforcement data includes the content of the positioning reinforcement signal and the measurement date and time at which the positioning reinforcement signal was received. The positioning reinforcement data is one of pieces of measured data.

The positioning signal receiver 203 receives a positioning signal and then outputs positioning data. The positioning data includes a result obtained by receiving a positioning signal, such as three-dimensional coordinate values and a pseudo-distance, and the measurement date and time at which the positioning signal was received. The positioning data is one of pieces of measured data.

The inertial measurement device 204 measures the angular velocity and acceleration of the measurement vehicle and then outputs inertial measurement data. The inertial measurement data includes the angular velocity of the measurement vehicle, the acceleration of the measurement vehicle, and the measurement date and time at which the measurement was performed. The inertial measurement data is one of pieces of measured data.

The odometer 205 measures the travel distance of the measurement vehicle and then outputs distance data. The distance data includes the travel distance of the measurement vehicle and the measurement date and time at which the measurement was performed. The distance data is one of pieces of measured data.

The laser scanner 206 performs laser measurement and then outputs distance azimuth direction data. The distance azimuth direction data includes a distance from the laser scanner 206 to each measurement point, an azimuth direction from the laser scanner 206 to each measurement point, and the measurement date and time at which the laser measurement was performed. The distance azimuth direction data is one of pieces of measured data.

Step S112 is three-dimensional position information generation processing.

In step S112, the three-dimensional position information generation unit 210 generates three-dimensional position information using the measured data acquired by the measurement instrument 201.

More specifically, the position calculation unit 211, the attitude calculation unit 212, and the point group generation unit 213 operate in the following way.

The position calculation unit 211 calculates the coordinate values of the measurement vehicle using the positioning reinforcement data, the positioning data, the inertial measurement data, and the distance data. Then, the position calculation unit 211 generates position information which is data indicating the coordinate values of the measurement vehicle. The method for calculating the coordinate values of the measurement vehicle is related art and, therefore, the description thereof is omitted.

The attitude calculation unit 212 calculates an attitude angle of the measurement vehicle using the positioning data, the inertial measurement data, and the distance data. Then, the attitude calculation unit 212 generates attitude information which is data indicating the attitude angle of the measurement vehicle. The method for calculating the attitude angle of the measurement vehicle is related art and, therefore, the description thereof is omitted.

The point group generation unit 213 calculates three-dimensional coordinate values of each portion of a terrestrial object using the distance azimuth direction data, the position information, and the attitude information. Then, the point group generation unit 213 generates three-dimensional position information which is data including the three-dimensional coordinate values of each portion of the terrestrial object. The method for calculating the three-dimensional coordinate values of each portion of the terrestrial object is related art and, therefore, the description thereof is omitted.

Step S113 is additional information acquisition processing.

In step S113, the additional information acquisition unit 220 acquires additional information.

The additional information is at least any one or some of authenticated user information, instrument information, measurement information, and algorithm information.

The authenticated user information is information about an authenticated user.

The instrument information is information about the measurement instrument 201.

The measurement information is information about the measurement performed to acquire measured data.

The algorithm information is information specifying an algorithm for generating three-dimensional position information and an algorithm for acquiring the measurement date and time.

More specifically, the time acquisition unit 221, the card reader 207, the authentication unit 222, and the additional information acquisition unit 220 operate in the following way.

The time acquisition unit 221 acquires the measurement date and time from any one of the positioning reinforcement data, the positioning data, the inertial measurement data, and the distance data.

When a user card is inserted into the card reader 207, the card reader 207 reads a user identifier from the inserted user card. The user card is an integrated circuit (IC) card issued to a user, with which a user identifier is previously registered.

Next, the authentication unit 222 determines whether the same user identifier as the read-out user identifier is registered with the user information database 291.

If the corresponding user identifier is registered with the user information database 291, the authentication unit 222 acquires user information associated with the corresponding user identifier from the user information database 291. The user information database 291 is data including user information about each user to be authenticated.

Then, the authentication unit 222 generates authenticated user information using the read-out user identifier and the acquired user information.

The authenticated user information includes at least any one of the name of an authenticated user, a user identifier for identifying the authenticated user, affiliation information indicating an affiliation of the authenticated user, and qualification information indicating a qualification which the authenticated user has.

The additional information acquisition unit 220 acquires instrument information.

The instrument information includes at least any one of the model number of the measurement instrument 201, the grade of the measurement instrument 201, the manufacturer name of a manufacture which manufactured the measurement instrument 201, the individual number of the measurement instrument 201, the date of manufacture of the measurement instrument 201, and calibration information about the measurement instrument 201.

The calibration information about the measurement instrument 201 includes at least any one of the calibration date and time of the measurement instrument 201, a calibration method employed for the measurement instrument 201, and identification information about a business operator which calibrated the measurement instrument 201.

Except for the calibration information about the measurement instrument 201, the instrument information is acquired from the measurement instrument 201. Moreover, the instrument information can be previously set to the user card by a certificate authority.

The calibration information about the measurement instrument 201, which is stored in the memory unit 290, is acquired from the memory unit 290.

The additional information acquisition unit 220 acquires measurement information.

The measurement information includes at least any one of the measurement date and time, the measurement location, the weather during measurement, the situation of the measurement location, the measurement cumulative time, and the number of captured satellites. The measurement cumulative time is a time obtained by cumulating times for which measurement was performed. The number of captured satellites is the number of positioning satellites captured during measurement.

The measurement date and time is acquired by the time acquisition unit 221.

The weather during measurement and the situation of the location are acquired from the Internet.

The measurement cumulative time is calculated by cumulating measurement times, which are times for which measurement was performed. The measurement time is acquired from the measurement instrument 201.

The number of captured satellites, which is included in the positioning data, is acquired from the positioning data.

The measurement information can include measurement accuracy information. The measurement accuracy information is information indicating measurement accuracy. The measurement accuracy is obtained by calculating some kind of precision index indicating the measurement accuracy about position orientation obtained by the positioning signal receiver 203 based on, for example, the number of positioning satellites captured by the positioning signal receiver 203 (the number of positioning satellites which would have been captured by the positioning signal receiver 203) and the geometric arrangement of positioning satellites.

As such a precision index, for example, a geometrical dilution of precision (GDOP), a horizontal dilution of precision (HDOP), and a position dilution of precision (PDOP), which indicate the degree of influence on the positioning precision by the arrangement of GPS satellites in the sky, can be used.

The additional information acquisition unit 220 acquires algorithm information.

The algorithm information is information specifying at least any one of a position calculation algorithm, an attitude calculation algorithm, a position information generation algorithm, and a measurement date and time acquisition algorithm. The algorithm information includes at least any one of an algorithm identifier, implementer information, and processing sequence information.

The position calculation algorithm is an algorithm which is executed by the position calculation unit 211, and is an algorithm for calculating the coordinate values of the measurement vehicle.

The attitude calculation algorithm is an algorithm which is executed by the attitude calculation unit 212, and is an algorithm for calculating the attitude angle of the measurement vehicle.

The position information generation algorithm is an algorithm which is executed by the three-dimensional position information generation unit 210, and is an algorithm for generating three-dimensional position information.

The measurement date and time acquisition algorithm is an algorithm which is executed by the time acquisition unit 221, and is an algorithm for acquiring the measurement date and time from the measured data.

The algorithm identifier is an identifier for identifying an algorithm.

The implementer information is information about a person who implemented an algorithm.

The processing sequence information is information indicating the sequence of processing included in an algorithm.

The algorithm information is automatically input to the additional information acquisition unit 220 from each of the position calculation unit 211, the attitude calculation unit 212, the three-dimensional position information generation unit 210, and the time acquisition unit 221 according to the respective algorithms executed by them. Furthermore, in a case where the three-dimensional position information generation unit 210 is placed in a server instrument which is different from a movable body on which the measurement instrument 201 is mounted, the algorithm information can be automatically input from the server instrument to the additional information acquisition unit 220 via the instruction receiving unit 241.

Step S114 is information encryption processing.

In step S114, the information encryption unit 231 encrypts a set of the generated three-dimensional position information and the acquired additional information.

Encrypting a set of the three-dimensional position information and the additional information enables associating the additional information with the three-dimensional position information.

More specifically, the information encryption unit 231 encrypts a set of the generated three-dimensional position information and the acquired additional information by using at least any one of the following (1) to (7). A key required for encryption is safely distributed from a certificate authority.

### (1) Electronic signature by public key encryption

### (2) Common key encryption using a device-specific common key

The device-specific common key is a specific common key generated in a predetermined procedure by using a device-specific number and secret information.

### (3) Digest generation by common key encryption using a device-specific common key

The digest means a message digest or a message authentication code (MAC).

### (4) Function encryption to assign access right

The function encryption is also referred to as functional encryption.

### (5) Function encryption to assign an electronic signature

### (6) Detection encryption to detect falsification

The detection encryption is also referred to as falsification detection encryption.

### (7) Fixed-decompression-term encryption to assign a decompression term

The decompression term is a time limit by which decompression of data can be performed. The decompression can be replaced by decryption.

Step S115 is information transmission processing.

In step S115, the information transmission unit 232 transmits encrypted information data 110 to the data storage apparatus 300.

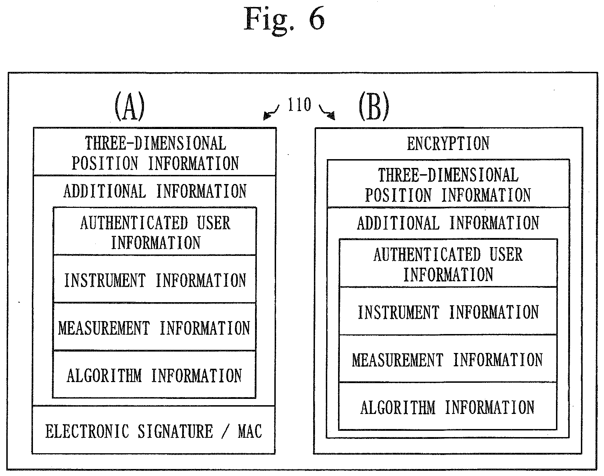

The encrypted information data 110 is data obtained by encrypting a set of the generated three-dimensional position information and the acquired additional information.
(A) of FIG. 6 illustrates an image of encrypted information data 110 which is generated by appending an electronic signature or an MAC to a set of the three-dimensional position information and the additional information.
(B) of FIG. 6 illustrates an image of encrypted information data 110 which is generated by encrypting a set of the three-dimensional position information and the additional information with common key encryption, function encryption, detection encryption, or fixed-decompression-term encryption.

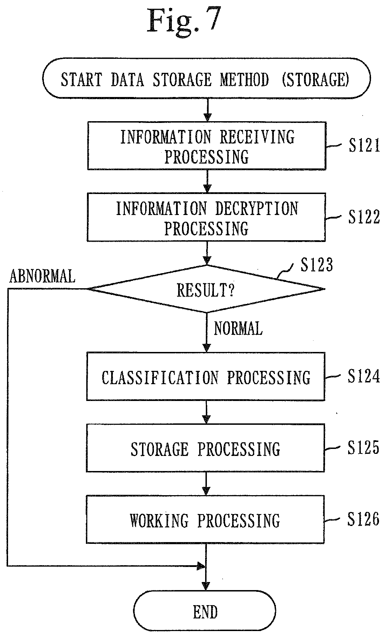

A data storage method (storage) used for the data storage apparatus 300 to store three-dimensional position information is described based on FIG. 7.

Step S121 is receiving processing.

In step S121, the information receiving unit 311 receives the encrypted information data 110 transmitted from the positioning and measurement apparatus 200.

Step S122 is information decryption processing.

In step S122, the information decryption unit 312 performs decryption on the received encrypted information data 110.

When decryption is normally completed, the three-dimensional position information and the additional information are decrypted.

More specifically, the information decryption unit 312 performs decryption and verification such as those described as follows.

In a case where an electronic signature is included in the encrypted information data 110, the information decryption unit 312 performs signature verification.

In a case where the encryption method to be used is common key encryption, the information decryption unit 312 performs decryption using a device-specific common key.

In a case where a digest is included in the encrypted information data 110, the information decryption unit 312 performs digest verification using a device-specific common key.

In a case where the encryption method to be used is function encryption, the information decryption unit 312 performs decryption and signature verification using a public key having an access right.

In a case where the encryption method to be used is falsification detection encryption, the information decryption unit 312 performs falsification detection and decryption.

In a case where the encryption method to be used is fixed-decompression-term encryption, the information decryption unit 312 performs decryption using a key corresponding to the current date and time.

In step S123, the information decryption unit 312 evaluates a decryption result.

If the decryption result is normal, processing proceeds to step S124.

If the decryption result is abnormal, processing for the data storage method (storage) ends.

Step S124 is classification processing.

In step S124, the classification unit 313 classifies the decrypted three-dimensional position information based on the decrypted additional information.

More specifically, the classification unit 313 performs ranking on the decrypted three-dimensional position information based on the decrypted additional information.

The ranking is performed in the following way.

The classification unit 313 calculates a score based on the additional information. The score represents a high or low degree of accuracy of the three-dimensional position information. More specifically, the classification unit 313 acquires, from a score table, scores corresponding to respective pieces of information, i.e., information included in the authenticated user information, information included in the instrument information, information included in the measurement information, and information included in the algorithm information.

Then, the classification unit 313 calculates the sum of the acquired scores. The score table, which is a table in which information and a score are associated with each other, is previously stored in the memory unit 390.

Then, the classification unit 313 acquires, from a ranking table, a rank value representing a rank corresponding to the calculated score. The ranking table, which is a table in which a range of scores and a rank value are associated with each other, is previously stored in the memory unit 390.

Step S125 is storage processing.

In step S125, the classification unit 313 stores the classified three-dimensional position information in the storage unit 380. The three-dimensional position information is assumed to be safely stored with use of, for example, encryption or access control.

More specifically, the classification unit 313 stores three-dimensional position information and additional information thereof in the storage unit 380 on a rank-by-rank basis. The rank information is information indicating a rank, and specific rank information is a rank value.

Three-dimensional position information of the first rank is stored in the first storage unit 381, three-dimensional position information of the second rank is stored in the second storage unit 382, and three-dimensional position information of the third rank is stored in the third storage unit 383.

Step S126 is working processing.

In step S126, the working unit 320 works three-dimensional position information according to an instruction from an administrator.

More specifically, the three-dimensional position information is edited into the format of road map data for use in a car navigation system. Moreover, position information about, for example, parking lots, traffic lights, and traffic lanes is appended to the three-dimensional position information.

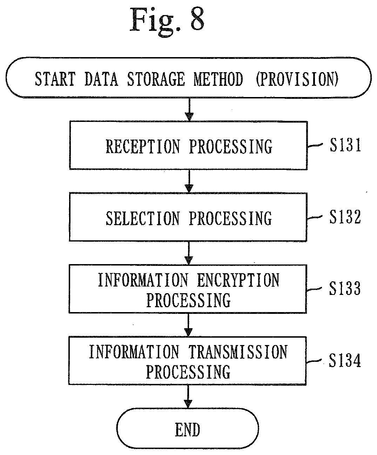

A data storage method (provision) used for the data storage apparatus 300 to provide three-dimensional position information to the data utilization apparatus 400 is described based on FIG. 8.

Step S131 is reception processing.

In step S131, the reception unit 331 receives request data 129 transmitted from the data utilization apparatus 400.

The request data 129 includes regional information and rank information.

Step S132 is selection processing.

In step S132, the selection unit 332 selects three-dimensional position information from the storage unit 380 based on the request data 129.

More specifically, the selection unit 332 selects a storage unit corresponding to the rank information included in the request data 129. Then, the selection unit 332 selects three-dimensional position information about a region specified by the regional information included in the request data 129 from the selected storage unit.

Step S133 is information encryption processing.

In step S133, the information encryption unit 333 encrypts a set of the selected three-dimensional position information and the rank information about the selected three-dimensional position information.

The encryption method is similar to that in step S114.

Step S134 is information transmission processing.

In step S134, the information transmission unit 334 transmits encrypted information data 120 to the data utilization apparatus 400, which has transmitted the request data 129.

The encrypted information data 120 is data obtained by encrypting a set of the selected three-dimensional position information and the rank information about the selected three-dimensional position information.

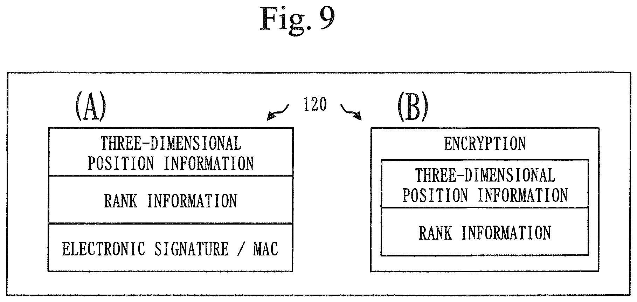

(A) of FIG. 9 illustrates an image of encrypted information data 120 which is generated by appending an electronic signature or an MAC to a set of the three-dimensional position information and the rank information.

(B) of FIG. 9 illustrates an image of encrypted information data 120 which is generated by encrypting a set of the three-dimensional position information and the rank information with common key encryption, function encryption, detection encryption, or fixed-decompression-term encryption.

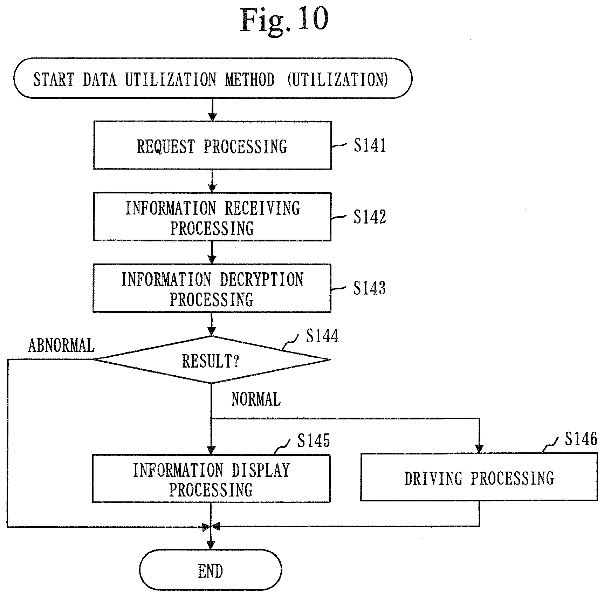

A data utilization method (utilization) used for the data utilization apparatus 400 to utilize three-dimensional position information is described based on FIG. 10.

Step S141 is request processing.

In step S141, the request unit 411 transmits request data 129 for requesting three-dimensional position information to the data storage apparatus 300.

More specifically, the user inputs regional information and rank information to the data utilization apparatus 400 using an input interface. Then, the request unit 411 generates request data 129 including the input regional information and rank information, and transmits the generated request data 129 to the data storage apparatus 300.

Step S142 is information receiving processing.

In step S142, the information receiving unit 412 receives the encrypted information data 120 transmitted from the data storage apparatus 300.

Step S143 is information decryption processing.

In step S143, the information decryption unit 413 performs decryption on the received encrypted information data 120.

In a case where decryption is normally completed, the three-dimensional position information and the rank information are decrypted.

The decryption method is similar to that in step S122.

In step S144, the information decryption unit 413 evaluates a decryption result.

If the decryption result is normal, processing proceeds to step S145 and step S146.

If the decryption result is abnormal, processing for the data utilization method ends.

Step S145 is information display processing.

In step S145, the information display unit 414 displays the decrypted three-dimensional position information, the decrypted rank information, and the decryption result.

Step S146 is driving processing.

In step S146, the driving unit 430 automatically drives the utilization vehicle utilizing the decrypted three-dimensional position information.

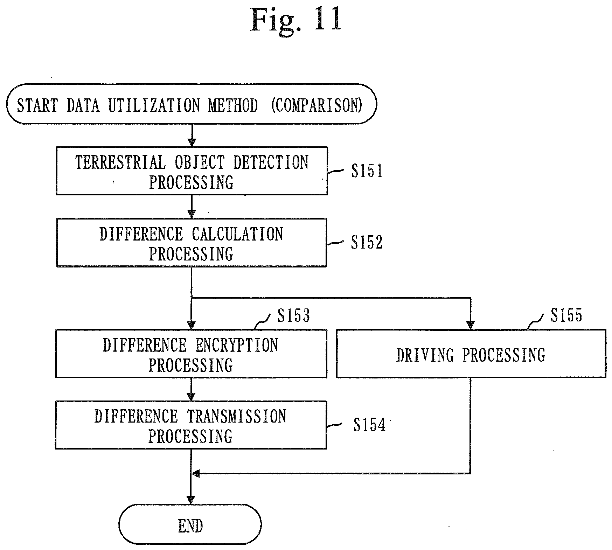

A data utilization method (comparison) used for the data utilization apparatus 400 to compare the three-dimensional position information with the current status is described based on FIG. 11.

Step S151 is terrestrial object detection processing.

In step S151, the terrestrial object detection unit 421 detects a terrestrial object present around the utilization vehicle.

More specifically, the sensor 401 observes the surrounding area of the utilization vehicle to output observed data. The observed data is data including information obtained by observation. Then, the terrestrial object detection unit 421 detects a terrestrial object present around the utilization vehicle by using the observed data.

More specifically, the terrestrial object detection unit 421 detects a terrestrial object in the following way.

The laser scanner, which is one element of the sensor 401, performs laser measurement to output distance azimuth direction data. The distance azimuth direction data includes the luminance of the detected reflected light.

Moreover, the positioning device, which is one element of the sensor 401, calculates the position and attitude of the utilization vehicle to output position attitude data.

Next, the terrestrial object detection unit 421 generates three-dimensional point group data in the MMS using the distance azimuth direction data and the position attitude data. The three-dimensional point group data includes three-dimensional coordinate values and reflection luminance for each measurement point.

Then, the terrestrial object detection unit 421 identifies a terrestrial object present at a measurement point based on the reflection luminance of the measurement point, and identifies the position of the terrestrial object based on the three-dimensional coordinate values of the measurement point.

The detected terrestrial object includes, for example, a guardrail, a sign, a center line, a pedestrian crosswalk, and a traffic light.

Step S152 is difference calculation processing.

In step S152, the difference calculation unit 422 calculates a difference between the position of the detected terrestrial object and the position of a terrestrial object identified by the three-dimensional position information.

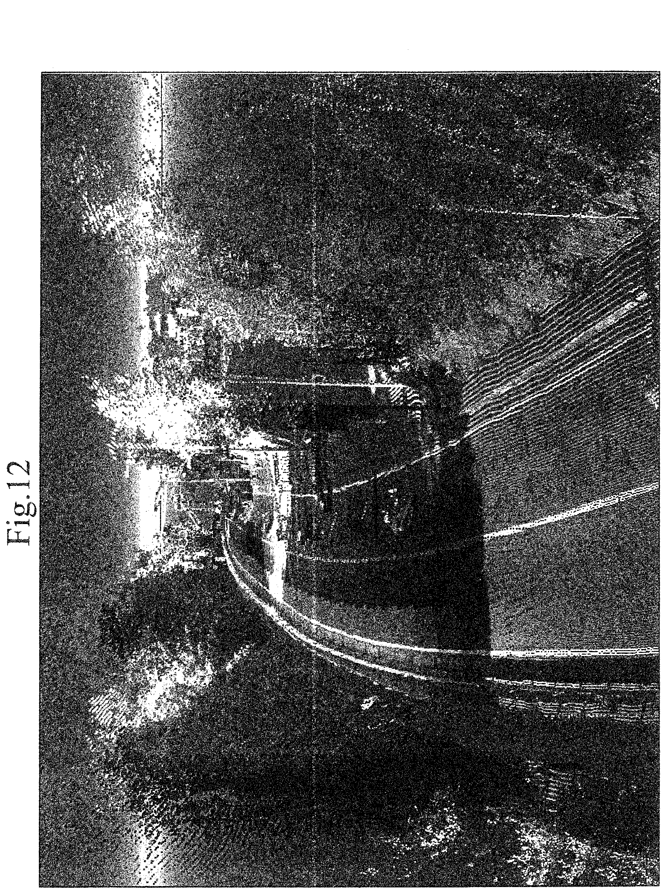

FIG. 12 illustrates a point group image obtained by imaging three-dimensional point group data or three-dimensional position information. The point group image is an image in which points of colors corresponding to the reflection luminances of the respective measurement points are drawn at the portions corresponding to the three-dimensional coordinate values of the respective measurement points.

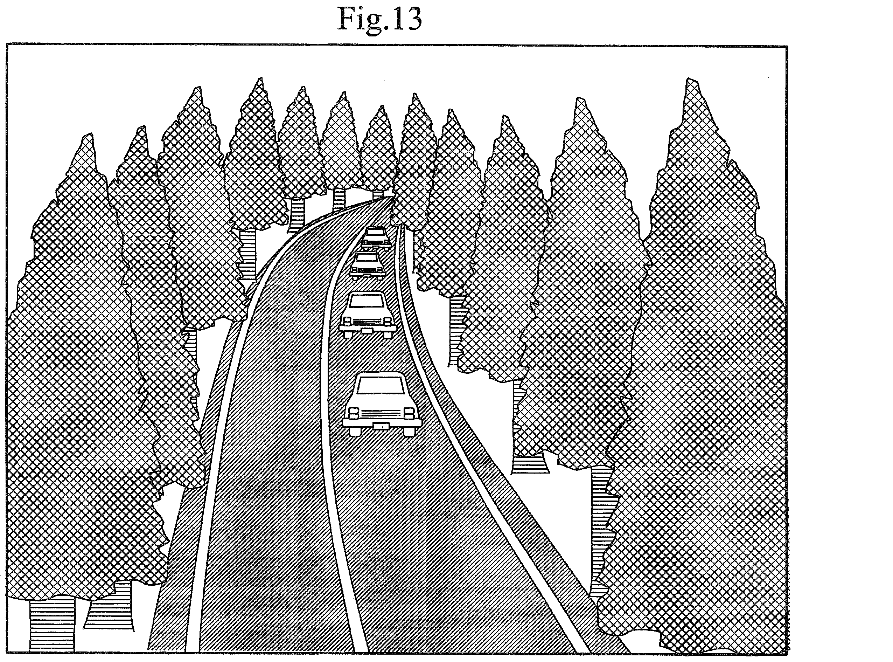

FIG. 13 illustrates a picture of the point group image illustrated in FIG. 12.

Referring to FIG. 12 and FIG. 13, for example, white lines of the road are detected based on the reflection luminances.

If the road condition varies, a terrestrial object which is not present on a map represented by the three-dimensional position information is detected from the three-dimensional point group data. More specifically, for example, a new road or a depression on the road is detected.

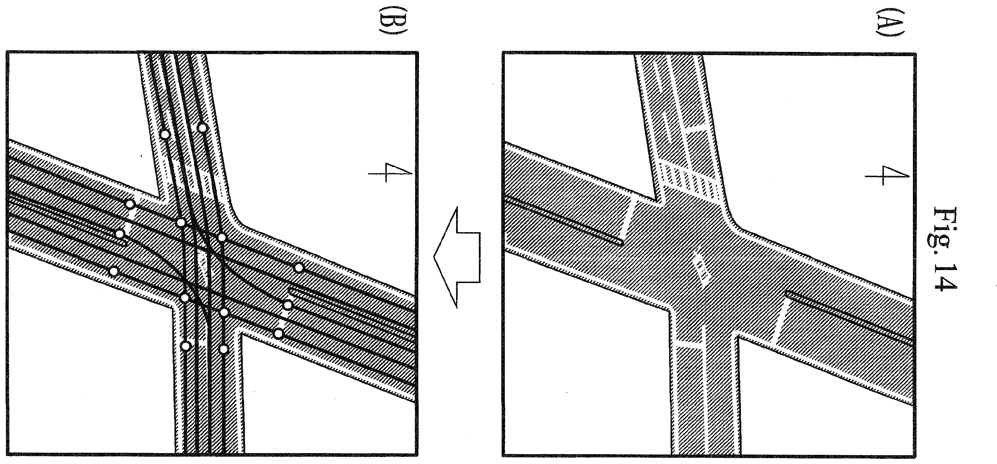

(A) of FIG. 14 illustrates a picture obtained by illustrating a point group image in a case where the position of the point of view is directly above the road.

For example, center lines, traffic lanes, and stop lines can be detected from such a point group image. Then, traveling lines and nodes can be specified based on the detection result. The traveling line is a path along which the vehicle travels. The traveling line is three-dimensional information obtained by adding information about a height direction to planar information. The node is a spot at which the traveling line changes.

(B) of FIG. 14 illustrates a picture obtained by illustrating a point group image to which traveling lines and nodes are added. The added lines represent traveling lines, and the added circles represent nodes.

While, in usual surveying, identification at the level of a traffic lane is impossible, performing measurement with a movable body enables measuring the real world in real time.

Referring back to FIG. 11, the description proceeds from step S153.

Step S153 is difference encryption processing.

In step S153, the difference encryption unit 423 encrypts difference information indicating the calculated difference.

The encryption method is similar to that in step S114.

Step S154 is difference transmission processing.

In step S154, the difference transmission unit 424 transmits encrypted difference data 130 to the data storage apparatus 300.

The encrypted difference data 130 is data obtained by encrypting the difference information.

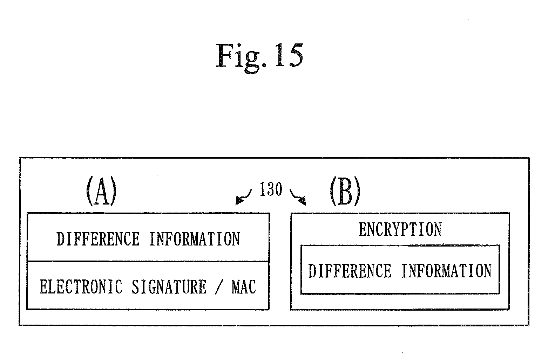

(A) of FIG. 15 illustrates an image of encrypted difference data 130 which is generated by appending an electronic signature or an MAC to the difference information.

(B) of FIG. 15 illustrates an image of encrypted difference data 130 which is generated by encrypting the difference information with common key encryption, function encryption, detection encryption, or fixed-decompression-term encryption.

Referring back to FIG. 11, step S155 is described.

Step S155 is driving processing.

In step S155, the driving unit 430 automatically drives the utilization vehicle by utilizing the position of the detected terrestrial object, the three-dimensional position information, and the difference information.

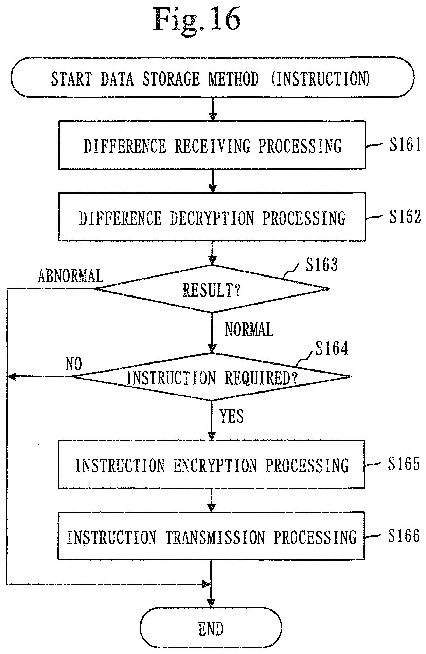

A data storage method (instruction) used for the data storage apparatus 300 to instruct the positioning and measurement apparatus 200 to perform remeasurement is described based on FIG. 16.

Step S161 is difference receiving processing.

In step S161, the difference receiving unit 341 receives the encrypted difference data 130 transmitted from the data utilization apparatus 400.

Step S162 is difference decryption processing.

In step S162, the difference decryption unit 342 performs decryption on the received encrypted difference data 130.

When decryption is normally completed, the difference information is decrypted.

The decryption method is similar to that in step S122.

In step S163, the difference decryption unit 342 evaluates a decryption result. If the decryption result is normal, processing proceeds to step S164.

If the decryption result is abnormal, processing for the data storage method (instruction) ends.

Step S164 is determination processing.

In step S164, the instruction unit 343 determines whether to instruct the positioning and measurement apparatus 200 to perform remeasurement based on the decrypted difference information.

More specifically, the instruction unit 343 compares the number of pieces of information included in the difference information with a difference threshold value. Then, if the number of pieces of information included in the difference information is greater than the difference threshold value, the instruction unit 343 determines to issue an instruction for remeasurement. The number of pieces of information included in the difference information is equivalent to the number of portions at which a difference occurred. The difference threshold value is a previously determined value.

If an instruction for remeasurement is to be issued, the instruction unit 343 generates instruction information for issuing an instruction for remeasurement. More specifically, the instruction unit 343 specifies a portion at which a difference occurred based on the difference information, and generates instruction information including information indicating the specified portion. After that, processing proceeds to step S165.

If an instruction for remeasurement is not to be issued, processing for the data storage method (instruction) ends.

Step S165 is instruction encryption processing.

In step S165, the instruction encryption unit 344 encrypts the generated instruction information.

The encryption method is similar to that in step S114.

Step S166 is instruction transmission processing.

In step S166, the instruction transmission unit 345 transmits encrypted instruction data 140 to the positioning and measurement apparatus 200.

The encrypted instruction data 140 is data obtained by encrypting the generated instruction information.

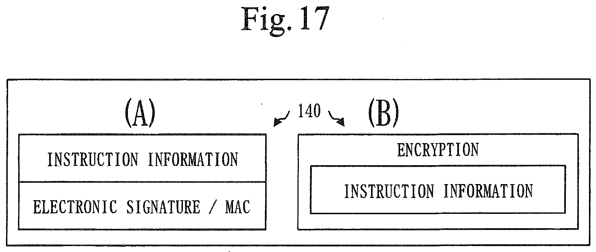

(A) of FIG. 17 illustrates an image of encrypted instruction data 140 which is generated by appending an electronic signature or an MAC to the instruction information.

(B) of FIG. 17 illustrates an image of encrypted instruction data 140 which is generated by encrypting the instruction information with common key encryption, function encryption, detection encryption, or fixed-decompression-term encryption.

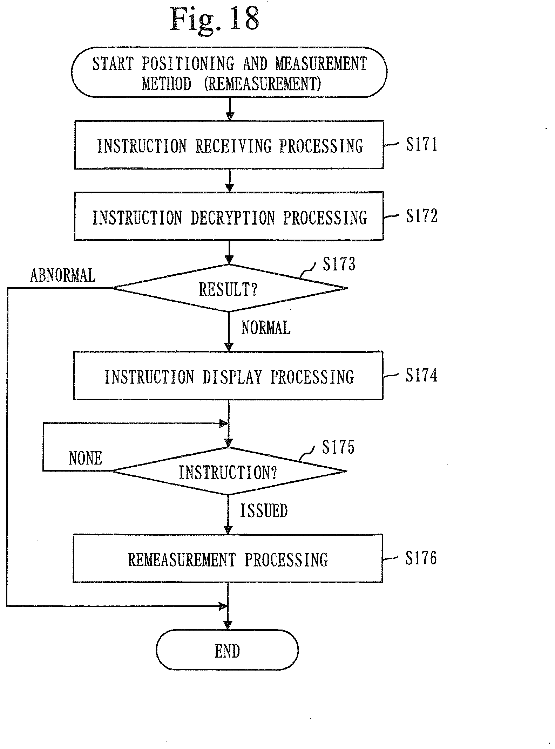

A positioning and measurement method (remeasurement) used for the positioning and measurement apparatus 200 to perform remeasurement is described based on FIG. 18.

Step S171 is instruction receiving processing.

In step S171, the instruction receiving unit 241 receives the encrypted instruction data 140 transmitted from the data storage apparatus 300.

Step S172 is instruction decryption processing.

In step S172, the instruction decryption unit 242 performs decryption on the received encrypted instruction data 140.

When decryption is normally completed, the instruction information is decrypted.

The decryption method is similar to that in step S122.

In step S173, the instruction decryption unit 242 evaluates a decryption result.

If the decryption result is normal, processing proceeds to step S174.

If the decryption result is abnormal, processing for the positioning and measurement method (remeasurement) ends.

Step S174 is instruction display processing.

In step S174, the instruction display unit 243 displays the decrypted instruction information.

In step S175, the user of the positioning and measurement apparatus 200 determines a portion which needs remeasurement based on the displayed instruction information and moves the measurement vehicle to the portion. Then, the user inputs an instruction for remeasurement to the positioning and measurement apparatus 200. More specifically, the user presses a start button for measurement.

If the instruction for remeasurement is input, processing proceeds to S176.

Step S176 is remeasurement processing.

In step S176, the measurement instrument 201 performs measurement to acquire measured data.

Subsequent operations are the same as in the positioning and measurement method (measurement).

### Description of Hardware

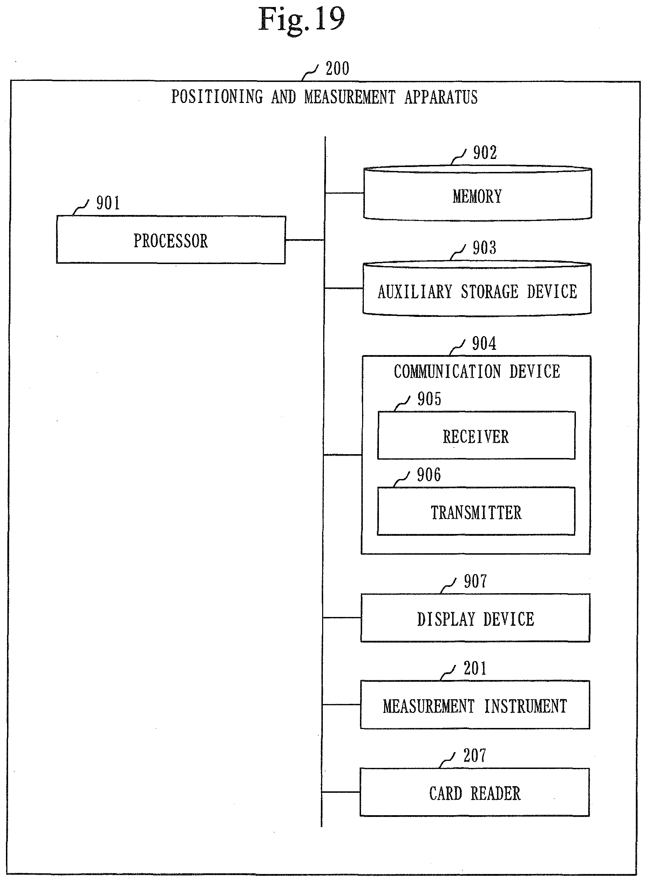

A hardware configuration of the positioning and measurement apparatus 200 is described based on FIG. 19.

The positioning and measurement apparatus 200 is a computer including hardware such as a processor 901, a memory 902, an auxiliary storage device 903, a communication device 904, a display device 907, the measurement instrument 201, and the card reader 207. The processor 901 is connected to the other pieces of hardware via signal lines.

The processor 901 is an integrated circuit (IC) which performs processing, and controls the other pieces of hardware. More specifically, the processor 901 is a CPU, a DSP, or a GPU. CPU is an abbreviation for central processing unit, DSP is an abbreviation for digital signal processor, and GPU is an abbreviation for graphics processing unit.

The memory 902 is a volatile storage device. The memory 902 is called a main storage device or a main memory. More specifically, the memory 902 is a random access memory (RAM).

The auxiliary storage device 903 is a non-volatile storage device. More specifically, the auxiliary storage device 903 is a ROM, an HDD, or a flash memory. ROM is an abbreviation for read-only memory, and HDD is an abbreviation for hard disk drive.

The communication device 904 includes a receiver 905 and a transmitter 906. More specifically, the communication device 904 is a communication chip or a network interface card (NIC).

The display device 907 is a display which displays information. More specifically, the display device 907 is a liquid crystal display.

A program for implementing the functions of "units" including the three-dimensional position information generation unit 210, the additional information acquisition unit 220, the information encryption unit 231, the instruction decryption unit 242, and the instruction display unit 243 is stored in the auxiliary storage device 903. The program for implementing the functions of "units" is loaded onto the memory 902 and is then executed by the processor 901.

Furthermore, an operating system (OS) is stored in the auxiliary storage device 903. At least a part of the OS is loaded onto the memory 902 and is then executed by the processor 901.

Thus, the processor 901 executes the program for implementing the functions of "units" while executing the OS.

Data obtained by executing the program for implementing the functions of "units" is stored in a storage device such as the memory 902, the auxiliary storage device 903, a register included in the processor 901, or a cache memory included in the processor 901. These storage devices function as the memory unit 290.

Furthermore, the positioning and measurement apparatus 200 can include a plurality of processors 901, and the plurality of processors 901 can execute the program for implementing the functions of "units" in cooperation with each other.

The communication device 904 functions as a communication unit which communicates data, the receiver 905 functions as the instruction receiving unit 241, and the transmitter 906 functions as the information transmission unit 232.

The display device 907 functions as the instruction display unit 243.

Hardware obtained by integrating the processor 901, the memory 902, and the auxiliary storage device 903 is referred to as a "processing circuitry".

"Unit" can be replaced with "processing" or "process". The function of a "unit" can be implemented by firmware.

The program for implementing the functions of "units" can be stored in a non-volatile storage medium, such as a magnetic disc, an optical disc, or a flash memory.

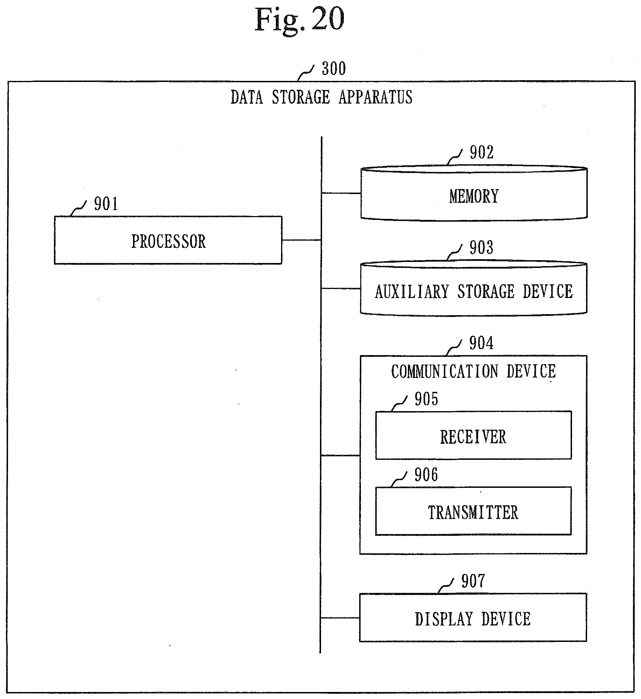

A hardware configuration of the data storage apparatus 300 is described based on FIG. 20.

The data storage apparatus 300 is a computer including hardware such as a processor 901, a memory 902, an auxiliary storage device 903, a communication device 904, and a display device 907. The processor 901 is connected to the other pieces of hardware via signal lines.

The functions of these pieces of hardware are similar to the functions of pieces of hardware of the positioning and measurement apparatus 200.

A program for implementing the functions of "units" including the information decryption unit 312, the classification unit 313, the working unit 320, the selection unit 332, the information encryption unit 333, the difference decryption unit 342, the instruction unit 343, and the instruction encryption unit 344 is stored in the auxiliary storage device 903. The program for implementing the functions of "units" is loaded onto the memory 902 and is then executed by the processor 901.

Furthermore, the data storage apparatus 300 can include a plurality of processors 901, and the plurality of processors 901 can execute the program for implementing the functions of "units" in cooperation with each other.

A storage device such as the memory 902 or the auxiliary storage device 903 functions as the memory unit 390.

The communication device 904 functions as a communication unit which communicates data, the receiver 905 functions as the information receiving unit 311, the reception unit 331, and the difference receiving unit 341, and the transmitter 906 functions as the information transmission unit 334 and the instruction transmission unit 345.

The display device 907 functions as a display unit which displays information.

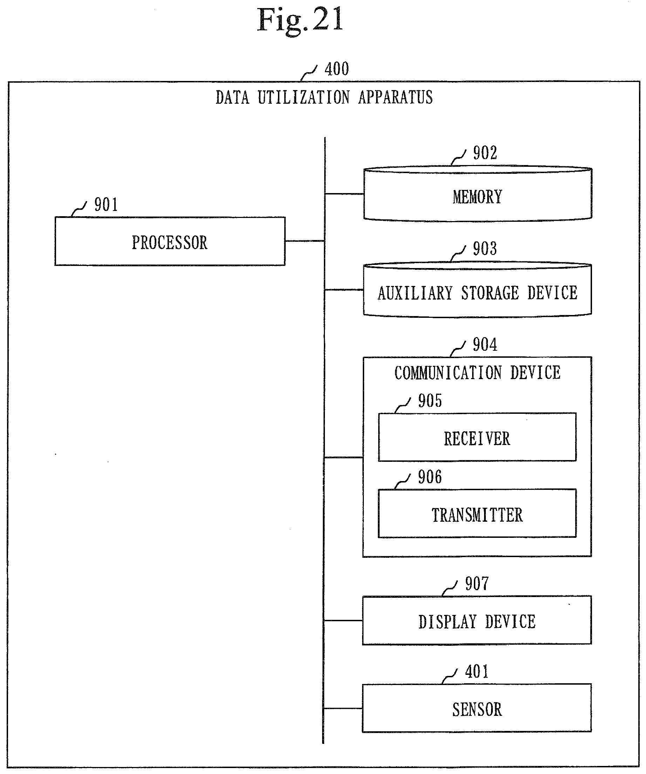

A hardware configuration of the data utilization apparatus 400 is described based on FIG. 21.

The data utilization apparatus 400 is a computer including hardware such as a processor 901, a memory 902, an auxiliary storage device 903, a communication device 904, a display device 907, and the sensor 401. The processor 901 is connected to the other pieces of hardware via signal lines.

Except for the sensor 401, the functions of these pieces of hardware are similar to the functions of pieces of hardware of the positioning and measurement apparatus 200.

A program for implementing the functions of "units" including the request unit 411, the information decryption unit 413, the terrestrial object detection unit 421, the difference calculation unit 422, the difference encryption unit 423, and the driving unit 430 is stored in the auxiliary storage device 903. The program for implementing the functions of "units" is loaded onto the memory 902 and is then executed by the processor 901.

Furthermore, the data utilization apparatus 400 can include a plurality of processors 901, and the plurality of processors 901 can execute the program for implementing the functions of "units" in cooperation with each other.

A storage device such as the memory 902 or the auxiliary storage device 903 functions as the memory unit 490.

The communication device 904 functions as a communication unit which communicates data, the receiver 905 functions as the information receiving unit 412, and the transmitter 906 functions as the request unit 411 and the difference transmission unit 424.

The display device 907 functions as the information display unit 414.

### Advantageous Effects of Embodiment 1

Encrypting a set of three-dimensional position information acquired by a measurement apparatus such as an MMS and additional information appended to the three-dimensional position information enables preventing falsification of the three-dimensional position information and the additional information. Moreover, it enables increasing the reliability of measured data itself.

Since authenticated user information is included in the additional information, the technical skill of a user who generates three-dimensional position information can be objectively evaluated.

Moreover, three-dimensional position information that is based on measured data, the accuracy of which varies according to the technical skill of a user, can be finely classified and managed based on the accuracy. Since the accuracy of three-dimensional position information is made uniform by classification, assuring the accuracy of three-dimensional position information is enabled.

Since instrument information is included in the additional information, the performance of a measurement instrument can be objectively evaluated.

Moreover, since, even if pieces of measured data different in accuracy have been acquired by measurement being performed by different measurement apparatuses, pieces of three-dimensional position information that are based on the respective pieces of measured data are classified by ranks of accuracy, assuring the accuracy of three-dimensional position information is enabled.

Since measurement information is included in the additional information, a measurement environment can be objectively evaluated.

Moreover, since, even if pieces of measured data different in accuracy have been acquired by measurement being performed in different measurement environments, pieces of three-dimensional position information that are based on the respective pieces of measured data are classified by ranks of accuracy, assuring the accuracy of three-dimensional position information is enabled.

Encrypting three-dimensional position information enables assuring confidentiality, completeness, authenticity, and transmission source confirmation, so that falsification, identity theft, repeat attack, and transmission denial can be prevented.

Since, even in a case where pieces of three-dimensional position information that are needed due to the difference in the respective attributes of a great number of users which serve as transmission destinations of three-dimensional position information vary with the transmission destinations, the pieces of three-dimensional position information are classified based on the additional information, pieces of three-dimensional position information corresponding to the respective transmission destinations can be delivered.

Since three-dimensional position information is ranked, three-dimensional position information appropriate for a request from each transmission destination can be provided. Moreover, management of three-dimensional position information is facilitated.

Three-dimensional position information is acquired by the positioning and measurement apparatus 200. Moreover, information equivalent to the latest three-dimensional position information is acquired by the data utilization apparatus 400.

Since an instruction for remeasurement to update measured data and three-dimensional position information is issued based on a difference between the latest three-dimensional position information and the past three-dimensional position information, the user of the positioning and measurement apparatus 200 is allowed to perform measurement work at required timing.

Detecting a difference between the latest three-dimensional position information and the past three-dimensional position information enables capturing a change in a terrestrial object which triggers updating of three-dimensional position information.

Acquisition of three-dimensional position information is performed during movement with, for example, a vehicle, storage of three-dimensional position information is performed by a server or in cloud storage, and utilization of three-dimensional position information is performed during movement with, for example, a vehicle. This enables efficient acquisition, storage, and utilization of three-dimensional position information.

Authentication using an IC card enables simplifying procedures for user authentication.

### Embodiment 2

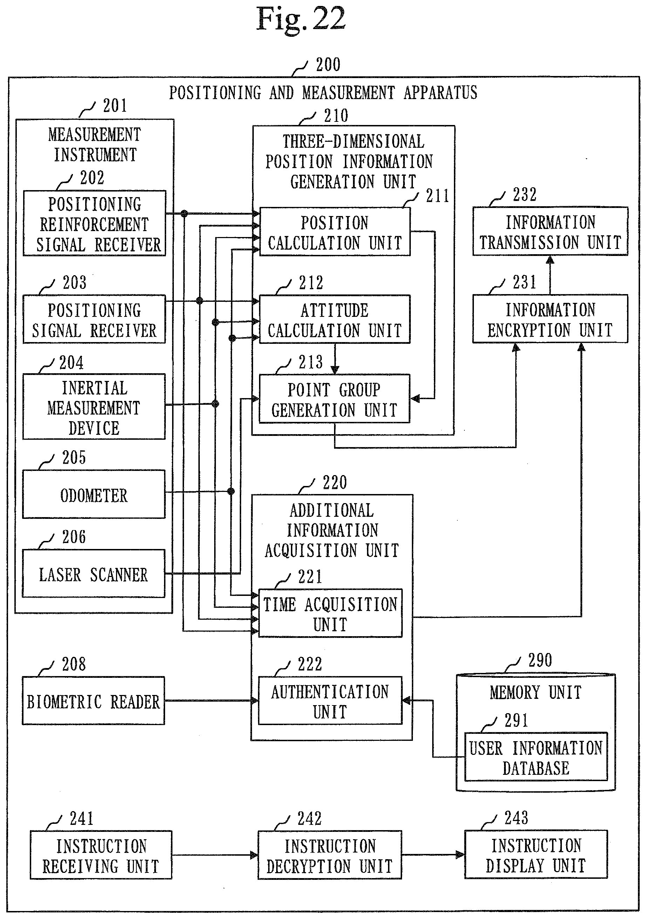

An embodiment which performs biometric authentication instead of card authentication is described based on FIG. 22. However, descriptions that overlap those in the Embodiment 1 are omitted or simplified.

### Description of Configuration

The configuration of the positioning and measurement data system 100 is the same as that in the Embodiment 1.

A configuration of the positioning and measurement apparatus 200 is described based on FIG. 22.

The positioning and measurement apparatus 200 includes a biometric reader 208 instead of the card reader 207 described in the Embodiment 1.

The biometric reader 208 is a device which reads biological information from the user. Specific biological information includes, for example, a finger print, an iris, a vein, and a genome.

The authentication unit 222 performs biometric authentication with respect to biological information read by the biometric reader 208.

The other constituent elements are the same as those in the Embodiment 1.

The configuration of the data storage apparatus 300 and the configuration of the data utilization apparatus 400 are the same as those in the Embodiment 1.

### Description of Operation

The flow of processing for the positioning and measurement method (measurement) employed by the positioning and measurement apparatus 200 is the same as that in the Embodiment 1.

However, in the additional information acquisition processing (S113), the biometric reader 208 and the authentication unit 222 operate in the following way.

When a part of the body of the user is held over the biometric reader 208, the biometric reader 208 reads biological information about the user.

Next, the authentication unit 222 determines whether biological information which matches the read biological information is registered with the user information database 291.

If the above biological information is registered with the user information database 291, the authentication unit 222 acquires user information associated with the above biological information from the user information database 291. The acquired user information serves as authenticated user information.

The positioning and measurement method (remeasurement) employed by the positioning and measurement apparatus 200 is the same as that in the Embodiment 1.

The data storage method employed by the data storage apparatus 300 is the same as that in the Embodiment 1.

The data utilization method employed by the data utilization apparatus 400 is the same as that in the Embodiment 1.

### Advantageous Effects of Embodiment 2

Authentication using biological information enables increasing the reliability of user authentication. In particular, it enables preventing identity theft of users. As a result, the reliability of authenticated user information, which is one of pieces of additional information, increases, and, therefore, the reliability of three-dimensional position information associated with the user information increases.

### Supplemental to Embodiments

In each embodiment, the functions of the positioning and measurement apparatus 200, the data storage apparatus 300, and the data utilization apparatus 400 can be implemented by hardware.

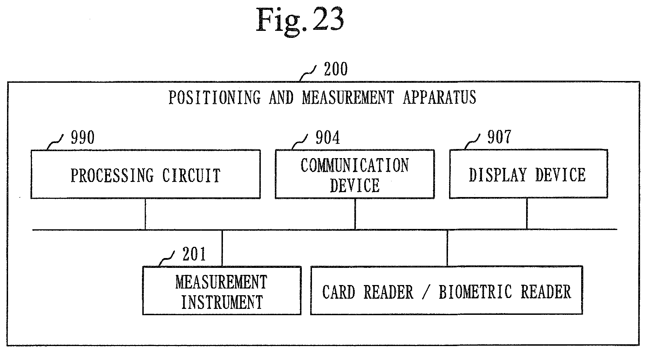

FIG. 23 illustrates a configuration in which the function of the positioning and measurement apparatus 200 is implemented by hardware.

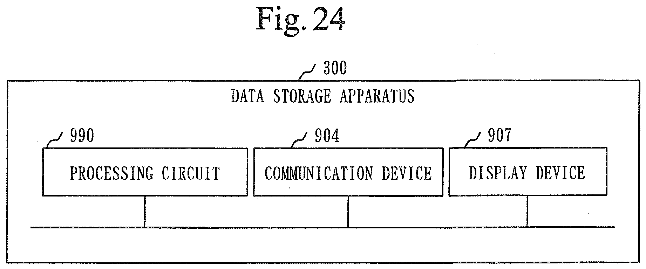

FIG. 24 illustrates a configuration in which the function of the data storage apparatus 300 is implemented by hardware.

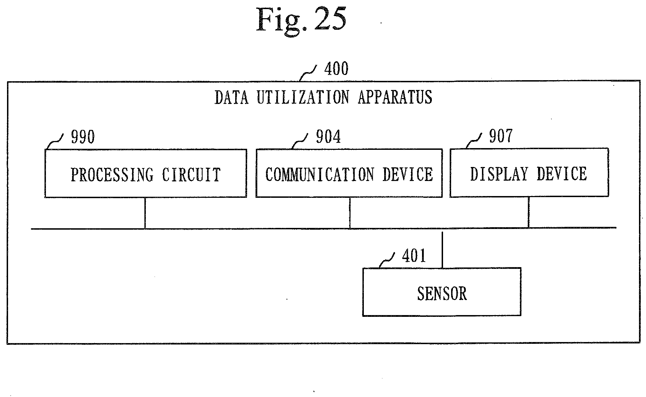

FIG. 25 illustrates a configuration in which the function of the data utilization apparatus 400 is implemented by hardware.

Each of the positioning and measurement apparatus 200, the data storage apparatus 300, and the data utilization apparatus 400 includes a processing circuit 990. The processing circuit 990 is also called a processing circuitry.

The processing circuit 990 is a dedicated electronic circuit which implements the functions of "units" described in each embodiment. The "unit" also includes a storage unit.

More specifically, the processing circuit 990 is a single circuit, a composite circuit, a programmed processor, a parallel programmed processor, a logic IC, a GA, an ASIC, an FPGA, or their combination. GA is an abbreviation for Gate Array, ASIC is an abbreviation for Application Specific Integrated Circuit, and FPGA is an abbreviation for Field Programmable Gate Array.

Furthermore, each of the positioning and measurement apparatus 200, the data storage apparatus 300, and the data utilization apparatus 400 can include a plurality of processing circuits 990, and the plurality of processing circuits 990 can implement the functions of "units" in cooperation with each other.

The function of each of the positioning and measurement apparatus 200, the data storage apparatus 300, and the data utilization apparatus 400 can be implemented by a combination of software and hardware. Thus, a part of "units" can be implemented by software, and the remaining part of the "units" can be implemented by hardware.

Each embodiment is merely an example of a desirable embodiment, and is not intended to limit the technical scope of the invention. Each embodiment can be carried out in part, or can be carried out in combination with another embodiment.

The procedures described with use of flowcharts and so on are examples of the procedures of a method and a program in the invention.

### List of Reference Signs

- 100: positioning and measurement data system
- 110: encrypted information data
- 120: encrypted information data
- 129: request data
- 130: encrypted difference data
- 140: encrypted instruction data
- 200: positioning and measurement apparatus
- 201: measurement instrument
- 202: positioning reinforcement signal receiver
- 203: positioning signal receiver
- 204: inertial measurement device
- 205: odometer
- 206: laser scanner
- 207: card reader
- 208: biometric reader
- 210: three-dimensional position information generation unit
- 211: position calculation unit
- 212: attitude calculation unit
- 213: point group generation unit
- 220: additional information acquisition unit
- 221: time acquisition unit
- 222: authentication unit
- 231: information encryption unit
- 232: information transmission unit
- 241: instruction receiving unit
- 242: instruction decryption unit
- 243: instruction display unit
- 244: control unit
- 290: memory unit
- 291: user information database
- 300: data storage apparatus
- 311: information receiving unit
- 312: information decryption unit
- 313: classification unit
- 320: working unit
- 331: reception unit
- 332: selection unit
- 333: information encryption unit
- 334: information transmission unit
- 341: difference receiving unit
- 342: difference decryption unit
- 343: instruction unit
- 344: instruction encryption unit
- 345: instruction transmission unit
- 380: storage unit
- 381: first storage unit
- 382: second storage unit
- 383: third storage unit
- 390: memory unit
- 400: data utilization apparatus
- 401: sensor
- 411: request unit
- 412: information receiving unit
- 413: information decryption unit
- 414: information display unit
- 421: terrestrial object detection unit
- 422: difference calculation unit
- 423: difference encryption unit
- 424: difference transmission unit
- 430: driving unit
- 490: memory unit
- 491: three-dimensional position information
- 901: processor
- 902: memory
- 903: auxiliary storage device
- 904: communication device
- 905: receiver
- 906: transmitter
- 990: processing circuit.

## Claims

1. A data storage apparatus (300) comprising:
- an information decryption unit (413) to perform decryption on data generated by encrypting a set of three-dimensional position information and additional information appended to the three-dimensional position information;
- a classification unit (313) to classify the decrypted three-dimensional position information based on the decrypted additional information; and
- a storage unit (380) to store the classified three-dimensional position information,
wherein the three-dimensional position information is information generated by using measured data acquired by a measurement instrument (201), and wherein the additional information is at least any one of user information, which is information about an authenticated user, instrument information, which is information about the measurement instrument (201), and measurement information, which is information about measurement performed to acquire the measured data,
wherein, for the classification of the decrypted three-dimensional position information, the classification unit (313) ranks the decrypted three-dimensional position information based on the decrypted additional information, wherein the storage unit (380) stores the decrypted three-dimensional position information on a rank-by-rank basis,
wherein, for ranking the decrypted three-dimensional position information, the classification unit (313) calculates a score based on the additional information, the score representing a high or low degree of accuracy of the three-dimensional information, wherein calculating a score comprising:
the classification unit (313) acquires, from a score table, scores corresponding to respective additional information; the classification unit (313) calculates the sum of the acquired scores; and the classification unit (313) acquires, from a ranking table, a rank value representing the rank corresponding the calculated sum of the acquired scores.

2. The data storage apparatus (300) according to claim 1,
wherein the stored three-dimensional position information is information for identifying a position of a terrestrial object, and
wherein the data storage apparatus (300) further comprises:
- a difference decryption unit (342) to perform decryption on data generated by encrypting difference information indicating a difference between the position of the terrestrial object identified by the stored three-dimensional position information and a position of the terrestrial object taken after generation of the stored three-dimensional position information;
- a determination unit (343) to determine necessity or unnecessity of remeasurement for re-identifying a position of the terrestrial object based on the decrypted difference information; and
- a transmission unit (345) to transmit instruction information for issuing an instruction for remeasurement in a case where it is determined that remeasurement is necessary.

3. The data storage apparatus (300) according to claim 1,
wherein the user information includes at least any one of a user name of the authenticated user, a user identifier for identifying the authenticated user, affiliation information indicating an affiliation of the authenticated user, and qualification information indicating a qualification which the authenticated user has.

4. The data storage apparatus (300) according to claim 1,
wherein the instrument information includes at least any one of a model number of the measurement instrument (201), a grade of the measurement instrument, a manufacturer name of a manufacture which manufactured the measurement instrument, an individual number of the measurement instrument, a date of manufacture on which the measurement instrument was manufactured, calibration date and time at which the measurement instrument was calibrated, a calibration method employed for the measurement instrument, and a business operator name of a business operator which calibrated the measurement instrument.

5. The data storage apparatus (300) according to claim 1,
wherein the measurement information includes at least any one of measurement date and time, a measurement location, a weather when measurement was performed, a situation of the location at which measurement was performed, a cumulative time obtained by cumulating times for which measurement was performed, and a number of captured satellites which is a number of positioning satellites captured during measurement.

6. A data storage program for causing a computer to function as:
- an information decryption unit (242) to perform decryption on data generated by encrypting a set of three-dimensional position information and additional information appended to the three-dimensional position information;
- a classification unit (313) to classify the decrypted three-dimensional position information based on the decrypted additional information; and
- a storage unit (380) to store the classified three-dimensional position information,
wherein the three-dimensional position information is information generated by using measured data acquired by a measurement instrument (201), and wherein the additional information is at least any one of user information, which is information about an authenticated user, instrument information, which is information about the measurement instrument (201), and measurement information, which is information about measurement performed to acquire the measured data,
wherein, for the classification of the decrypted three-dimensional position information, the classification unit (313) ranks the decrypted three-dimensional position information based on the decrypted additional information, wherein the storage unit (380) stores the decrypted three-dimensional position information on a rank-by-rank basis,
wherein, for ranking the decrypted three-dimensional position information, the classification unit (313) calculates a score based on the additional information, the score representing a high or low degree of accuracy of the three-dimensional information, wherein calculating a score comprising:
the classification unit (313) acquires, from a score table, scores corresponding to respective additional information; the classification unit (313) calculates the sum of the acquired scores; and the classification unit (313) acquires, from a ranking table, a rank value representing the rank corresponding the calculated sum of the acquired scores.

## Patentansprüche

1. Datenspeichervorrichtung (300), die das Folgende aufweist:
- eine Informationsentschlüsselungseinheit (413) zum Entschlüsseln von Daten, die durch Verschlüsseln eines Satzes von dreidimensionalen Positionsinformationen und zusätzlichen Informationen erzeugt worden sind, die an die dreidimensionalen Positionsinformationen angehängt sind;
- eine Klassifizierungseinheit (313) zum Klassifizieren der entschlüsselten dreidimensionalen Positionsinformationen basierend auf den entschlüsselten zusätzlichen Informationen; und
- eine Speichereinheit (380) zum Speichern der klassifizierten dreidimensionalen Positionsinformationen,
wobei die dreidimensionalen Positionsinformationen Informationen sind, die unter Verwendung von Messdaten erzeugt worden sind, die von einem Messinstrument (201) erfasst worden sind, und
wobei die zusätzlichen Informationen mindestens eine von den folgenden Informationen umfassen: Benutzerinformationen, bei denen es sich um Informationen über einen authentifizierten Benutzer handelt, Instrumenteninformationen, bei denen es sich um Informationen über das Messinstrument (201) handelt, und Messinformationen, bei denen es sich um Informationen über die Messung handelt, die durchgeführt worden ist, um die Messdaten zu erfassen,
wobei die Klassifizierungseinheit (313) zur Klassifizierung der entschlüsselten dreidimensionalen Positionsinformationen einen Rang für die entschlüsselten dreidimensionalen Positionsinformationen basierend auf den entschlüsselten zusätzlichen Informationen vergibt,
wobei die Speichereinheit (380) die entschlüsselten dreidimensionalen Positionsinformationen auf einer Rang-für-Rang-Basis speichert, wobei die Klassifizierungseinheit (313) zum Vergeben des jeweiligen Rangs für die entschlüsselten dreidimensionalen Positionsinformationen eine Punktzahl basierend auf den zusätzlichen Informationen berechnet, wobei die Punktzahl einen hohen oder niedrigen Grad an Genauigkeit der dreidimensionalen Informationen darstellt, wobei das Berechnen einer Punktzahl umfasst, dass
- die Klassifizierungseinheit (313) Punktzahlen, die mit jeweiligen zusätzlichen Informationen korrespondieren, aus einer Punktzahltabelle erlangt;
- die Klassifizierungseinheit (313) die Summe der erlangten Punktzahlen berechnet; und
- die Klassifizierungseinheit (313) einen Rangwert, der den Rang darstellt, der mit der berechneten Summe der erlangten Punktzahlen korrespondiert, aus einer Rangtabelle erlangt.

2. Datenspeichervorrichtung (300) nach Anspruch 1,
wobei die gespeicherten dreidimensionalen Positionsinformationen Informationen zum Identifizieren einer Position eines terrestrischen Objekts sind, und
wobei die Datenspeichervorrichtung (300) ferner das Folgende aufweist:
- eine Differenzentschlüsselungseinheit (342) zum Entschlüsseln von Daten, die durch Verschlüsseln von Differenzinformationen erzeugt worden sind, die eine Differenz zwischen der Position des terrestrischen Objekts, die durch die gespeicherten dreidimensionalen Positionsinformationen identifiziert ist, und einer Position des terrestrischen Objekts angeben, die nach der Erzeugung der gespeicherten dreidimensionalen Positionsinformationen erfasst worden ist;
- eine Bestimmungseinheit (343) zum Bestimmen der Notwendigkeit oder Unnötigkeit einer erneuten Messung zur erneuten Identifizierung einer Position des terrestrischen Objekts basierend auf den entschlüsselten Differenzinformationen; und
- eine Übertragungseinheit (345) zum Übertragen von Befehlsinformationen zum Erteilen eines Befehls zur erneuten Messung in einem Fall, in dem bestimmt wird, dass eine erneute Messung erforderlich ist.

3. Datenspeichervorrichtung (300) nach Anspruch 1,
wobei die Benutzerinformationen mindestens eines der folgenden Elemente umfassen: einen Benutzernamen des authentifizierten Benutzers, eine Benutzerkennung zum Identifizieren des authentifizierten Benutzers, Zugehörigkeitsinformationen, die eine Zugehörigkeit des authentifizierten Benutzers angeben, und Qualifikationsinformationen, die eine Qualifikation angeben, über die der authentifizierte Benutzer verfügt.

4. Datenspeichervorrichtung (300) nach Anspruch 1,
wobei die Instrumenteninformationen mindestens eine der folgenden Informationen umfassen: eine Modellnummer des Messinstruments (201), eine Klasse des Messinstruments, einen Herstellernamen eines Herstellers, der das Messinstrument hergestellt hat, eine individuelle Nummer des Messinstruments, ein Herstellungsdatum, an dem das Messinstrument hergestellt worden ist, ein Kalibrierungsdatum und eine Kalibrierungszeit, zu denen das Messinstrument kalibriert worden ist, eine für das Messinstrument verwendete Kalibrierungsmethode und einen Unternehmensnamen eines Unternehmens, welches das Messinstrument kalibriert hat.

5. Datenspeichervorrichtung (300) nach Anspruch 1,
wobei die Messinformationen mindestens eine der folgenden Informationen umfassen: ein Messdatum und eine Messzeit, ein Messort, Wetterbedingungen zum Zeitpunkt der Messung, eine Gegebenheit des Ortes, an dem die Messung durchgeführt worden ist, eine kumulierte Zeit, die durch Kumulieren der Zeiten erhalten worden ist, zu denen die Messung durchgeführt worden ist, und eine Anzahl erfasster Satelliten, die eine Anzahl von Positionierungssatelliten ist, die während der Messung erfasst worden sind.

6. Datenspeicherprogramm, das einen Computer dazu veranlasst, als die folgenden Einheiten zu funktionieren:
- eine Informationsentschlüsselungseinheit (242) zum Entschlüsseln von Daten, die durch Verschlüsseln eines Satzes von dreidimensionalen Positionsinformationen und zusätzlichen Informationen erzeugt werden, die an die dreidimensionalen Positionsinformationen angehängt sind;
- eine Klassifizierungseinheit (313) zum Klassifizieren der entschlüsselten dreidimensionalen Positionsinformationen, basierend auf den entschlüsselten zusätzlichen Informationen; und
- eine Speichereinheit (380) zum Speichern der klassifizierten dreidimensionalen Positionsinformationen,
wobei die dreidimensionalen Positionsinformationen Informationen sind, die unter Verwendung von Messdaten erzeugt werden, die von einem Messinstrument (201) erfasst worden sind, und
wobei die zusätzlichen Informationen mindestens eine der folgenden Informationen umfassen: Benutzerinformationen, bei denen es sich um Informationen über einen authentifizierten Benutzer handelt, Instrumenteninformationen, bei denen es sich um Informationen über das Messinstrument (201) handelt, und Messinformationen, bei denen es sich um Informationen über die Messung handelt, die durchgeführt worden ist, um die Messdaten zu erfassen,
wobei die Klassifizierungseinheit (313) zum Klassifizieren zur Klassifizierung der entschlüsselten dreidimensionalen Positionsinformationen einen Rang für die entschlüsselten dreidimensionalen Positionsinformationen, basierend auf den entschlüsselten zusätzlichen Informationen vergibt,
wobei die Speichereinheit (380) die entschlüsselten dreidimensionalen Positionsinformationen auf einer Rang-für-Rang-Basis speichert,
wobei die Klassifizierungseinheit (313) zum Vergeben des jeweiligen Rangs für die entschlüsselten dreidimensionalen Positionsinformationen eine Punktzahl, basierend auf den zusätzlichen Informationen berechnet, wobei die Punktzahl einen hohen oder niedrigen Grad an Genauigkeit der dreidimensionalen Informationen darstellt, wobei das Berechnen einer Punktzahl umfasst, dass:
- die Klassifizierungseinheit (313) Punktzahlen, die mit jeweiligen zusätzlichen Informationen korrespondieren, aus einer Punktzahltabelle erlangt,
- die Klassifizierungseinheit (313) die Summe der erlangten Punktzahlen berechnet; und
- die Klassifizierungseinheit (313) einen Rangwert, der den Rang darstellt, der mit der berechneten Summe der erlangten Punktzahlen korrespondiert, aus einer Rangtabelle erlangt.

## Revendications

1. Appareil de stockage de données (300) comprenant :
- une unité de décryptage d'informations (413) pour effectuer un décryptage sur des données générées en cryptant un ensemble d'informations de position tridimensionnelles et des informations additionnelles jointes aux informations de position tridimensionnelles ;
- une unité de classification (313) pour classifier les informations de position tridimensionnelles décryptées sur la base des informations additionnelles décryptées ; et
- une unité de stockage (380) pour stocker les informations de position tridimensionnelles classifiées,
dans lequel les informations de position tridimensionnelles sont des informations générées en utilisant des données mesurées acquises par un instrument de mesurage (201), et
dans lequel les informations additionnelles sont au moins un type d'informations parmi des informations utilisateur qui sont des informations concernant un utilisateur authentifié, des informations d'instrument qui sont des informations concernant l'instrument de mesurage (201), et des informations de mesurage qui sont des informations concernant un mesurage effectué pour acquérir les données mesurées,
dans lequel, pour la classification des informations de position tridimensionnelles décryptées, l'unité de classification (313) classe les informations de position tridimensionnelles décryptées sur la base des informations additionnelles décryptées,
dans lequel l'unité de stockage (380) stocke les informations de position tridimensionnelles décryptées sur une base rang par rang ;
dans lequel, pour classer les informations de position tridimensionnelles décryptées, l'unité de classification (313) calcule un score sur la base des informations additionnelles, le score représentant un degré d'exactitude élevé ou bas des informations tridimensionnelles, dans lequel le calcul d'un score comprend les points suivants :
l'unité de classification (313) acquiert, à partir d'une table de scores, des scores correspondant à des informations additionnelles respectives ; l'unité de classification (313) calcule la somme des scores acquis ; et l'unité de classification (313) acquiert, à partir d'une table de classement, une valeur de classement représentant le rang correspondant à la somme calculée des scores acquis.

2. Appareil de stockage de données (300) selon la revendication 1, dans lequel les informations de position tridimensionnelles stockées sont des informations destinées à identifier une position d'un objet terrestre, et dans lequel l'appareil de stockage de données (300) comprend en outre :
- une unité de décryptage de différence (342) pour effectuer un décryptage sur des données générées en cryptant des informations de différence indiquant une différence entre la position de l'objet terrestre identifié via les informations de position tridimensionnelles stockées et une position de l'objet terrestre considérée après génération des informations de position tridimensionnelles stockées ;
- une unité de détermination (343) pour déterminer une nécessité ou une non-nécessité de mesurage destinée à ré-identifier une position de l'objet terrestre sur la base des informations de différence décryptéees ; et
- une unité de transmission (345) pour transmettre des informations d'instruction destinée à émettre une instruction de mesurage dans un cas où il est déterminé qu'un mesurage est nécessaire.

3. Appareil de stockage de données (300) selon la revendication 1,
dans lequel les informations utilisateur incluent au moins un élément parmi un nom d'utilisateur de l'utilisateur authentifié, un identifiant utilisateur destiné à identifier l'utilisateur authentifié, des informations d'affiliation indiquant une affiliation de l'utilisateur authentifié, et des informations de qualification indiquant une qualification détenue par l'utilisateur authentifié.

4. Appareil de stockage de données (300) selon la revendication 1,
dans lequel les informations d'instrument incluent au moins un élément parmi un numéro de modèle de l'instrument de mesurage (201), un niveau de l'instrument de mesurage, un nom de fabricant d'une usine qui a fabriqué l'instrument de mesurage, un numéro individuel de l'instrument de mesurage, une date de fabrication à laquelle l'instrument de mesurage a été fabriqué, une date et une heure d'étalonnage auxquelles l'instrument de mesurage a été étalonné, une méthode d'étalonnage utilisée pour l'instrument de mesurage, et un nom d'opérateur commercial d'un opérateur commercial qui a étalonné l'instrument de mesurage.

5. Appareil de stockage de données (300) selon la revendication 1,
dans lequel les informations de mesurage incluent au moins un élément parmi une date et une heure de mesurage, un emplacement de mesurage, une condition météorologique à laquelle le mesurage a été effectué, une situation de l'emplacement auquel le mesurage a été effectué, un temps cumulé obtenu en cumulant des temps pendant lesquels le mesurage a été effectué, et un nombre de satellites capturés qui est un nombre de satellites de positionnement capturés pendant le mesurage.

6. Programme de stockage de données destinées à amener un ordinateur à fonctionner comme :
- une unité de décryptage d'informations (242) pour effectuer un décryptage sur des données générées en cryptant un ensemble d'informations de position tridimensionnelles et des informations additionnelles jointes aux informations de position tridimensionnelles ;
- une unité de classification (313) pour classifier les informations de position tridimensionnelles décryptées sur la base des informations additionnelles décryptées ; et
- une unité de stockage (380) pour stocker les informations de position tridimensionnelles classifiées,
dans lequel les informations de position tridimensionnelles sont des informations générées en utilisant des données mesurées acquises par un instrument de mesurage (201), et
dans lequel les informations additionnelles sont au moins un type d'informations parmi des informations utilisateur qui sont des informations concernant un utilisateur authentifié, des informations d'instrument qui sont des informations concernant l'instrument de mesurage (201), et des informations de mesurage qui sont des informations concernant un mesurage effectué pour acquérir les données mesurées,
dans lequel, pour la classification des informations de position tridimensionnelles décryptées, l'unité de classification (313) classe les informations de position tridimensionnelles décryptées sur la base des informations additionnelles décryptées,
dans lequel l'unité de stockage (380) stocke les informations de position tridimensionnelles décryptées sur une base rang par rang ;
dans lequel, pour classer les informations de position tridimensionnelles décryptées, l'unité de classification (313) calcule un score sur la base des informations additionnelles, le score représentant un degré d'exactitude élevé ou bas des informations tridimensionnelles, dans lequel le calcul d'un score comprend les points suivants :
l'unité de classification (313) acquiert, à partir d'une table de scores, des scores correspondant à des informations additionnelles respectives ; l'unité de classification (313) calcule la somme des scores acquis ; et l'unité de classification (313) acquiert, à partir d'une table de classement, une valeur de classement représentant le rang correspondant à la somme calculée des scores acquis.
